(19) Europäisches Patentamt / European Patent Office / Office européen des brevets

(11) **EP 4 165 131 B1**

(12) # EUROPEAN PATENT SPECIFICATION

(45) Date of publication and mention of the grant of the patent: **17.09.2025 Bulletin 2025/38**

(21) Application number: **21822436.8**

(22) Date of filing: **11.06.2021**

(51) International Patent Classification (IPC):
***C08L 67/00*** *(2006.01)* ***C08H 7/00*** *(2011.01)*
***C08L 97/00*** *(2006.01)* ***C08L 101/16*** *(2006.01)*

(52) Cooperative Patent Classification (CPC):
(C-Sets available)
**C08L 67/02; C08H 6/00; C08L 67/04; C08L 97/005;**
C08L 101/16 (Cont.)

(86) International application number:
**PCT/SE2021/050569**

(87) International publication number:
**WO 2021/251897 (16.12.2021 Gazette 2021/50)**

(54) **COMPOSITION COMPRISING POLYESTER AND MODIFIED HARDWOOD LIGNIN**
ZUSAMMENSETZUNG AUS POLYESTER UND MODIFIZIERTEM HARTHOLZ-LIGNIN
COMPOSITION COMPRENANT DU POLYESTER ET DE LA LIGNINE DE FEUILLUS MODIFIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2020 SE 2030198**

(43) Date of publication of application:
**19.04.2023 Bulletin 2023/16**

(73) Proprietor: **Lignin Industries AB**
**741 71 Knivsta (SE)**

(72) Inventors:
- **CARRICK, Christopher**
  **182 33 Danderyd (SE)**
- **RUDA, Marcus**
  **762 51 Rimbo (SE)**
- **VERENDEL, Johan**
  **752 24 Uppsala (SE)**
- **ROULIN, Thomas**
  **170 67 Solna (SE)**

(74) Representative: **Kransell & Wennborg KB**
**P.O. Box 27834**
**115 93 Stockholm (SE)**

(56) References cited:
**WO-A1-2018/111183 US-A1- 2016 355 535**
**US-A1- 2019 112 479**

- **SHAO-JUN XIONG: "Economically Competitive Biodegradable PBAT/Lignin Composites: Effect of Lignin Methylation and Compatibilizer", ACS SUSTAINABLE CHEMISTRY & ENGINEERING, vol. 8, no. 13, 6 April 2020 (2020-04-06), US, pages 5338 - 5346, XP093166486, ISSN: 2168-0485, DOI: 10.1021/acssuschemeng.0c00789**
- **ALWADANI, N. S. ET AL.: "Modification of Kraft Lignin with Dodecyl Glycidyl Ethe", CHEMISTRYOPEN, vol. 8, 2019, pages 1258 - 1266, XP055880930, ISSN: 2191-1363, DOI: 10.1002/open.201900263**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/02, C08L 97/005;**
**C08L 67/04, C08L 97/005;**
**C08L 97/005, C08L 67/02;**
**C08L 97/005, C08L 67/04**

## Description

### FIELD OF THE INVENTION

The present invention relates to a composition comprising polyester and chemically modified hardwood lignin. The composition may be injection moulded.

### BACKGROUND

There is a need for more renewable plastic materials and lignin is a potential natural polymer to be used.

Lignin is the most available natural polymer next to cellulose. Lignin is found in the cell walls of fibrous plants and woods along with cellulose and hemicellulose. Lignin acts as a matrix material for polysaccharides, micro-fibrils and fibres and provides strength to plant stem. It is a high molecular weight phenolic macromolecule containing three different types of monolignol monomers p-coumaryl alcohol, coniferyl alcohol and sinapyl alcohol.

In recent years, much effort has been devoted to the development of new plastic materials being mixtures of well-known synthetic polymers, such as e.g. polyolefins, polyesters and polynitriles, and various forms of lignin. It follows that e.g. consumer products made of such mixtures are partly made of lignin. They may therefore be considered as more environmentally benign in comparison to the corresponding product made of a synthetic polymer, typically derived from non-recyclable fossil sources, as the only major constituent. Problems to be overcome with this type of mixtures include the relatively low general miscibility of lignin with various synthetic polymers, relatively low thermal stability of the intimate lignin and undesired properties of the resulting mixture, e.g. relatively low strain at break or tensile strength. Efforts have been devoted to addressing such problems by modification of the lignin employed, for example by adjustment of production parameters and by post-production chemical modification.

Polyester is a natural or synthetic polymer consisting of repeating units connected by an ester-group (-O-C[=O]-). Examples of thermoplastic synthetic polyesters include PolyEthylene Terephthalate (PET), employed as e.g. fibres in textile applications, PolyButylene Adipate Terephthalate (PBAT), used e.g. as a biodegradable substitute for polyethylene in e.g. plastic bags and PolyButylene Succinate (PBS), often a material of choice for biodegradable plastic films. Additional examples of thermoplastic polyesters include PolyLactic Acid (PLA), employed as e.g. a plastic filament material, PolyCaproLactone (PCL), which may be used as e.g. an impact resistance increasing additive and PolyButylene Terephthalate (PBT), commonly used as e.g. electrical insulator.

WO2018/111183 A1 discloses a polymeric material comprising a first polymer and a modified lignin. It is taught therein that the first polymer may be a natural or synthetic polymer. Separate embodiments, being related to the first polymer, include polymers selected from the list of polymers consisting of polyolefins, polyesters and polynitriles. Disadvantages of polymeric materials of this type include a significant reduction in tensile strength and elongation of break as compared to the first polymer *per-se.*

In Tappi Journal, March 2017, No 3, 111-121, Glasser *et al.* discloses compostable films comprising biodegradable polyesters and a modified kraft lignin. The modified kraft lignin was obtained by O-alkylation of the corresponding lignin using propylene oxide as alkylating agent. Disadvantages of compostable films of this type include an unstable bubble in the melt-processing production of 12-14 μm films, when the content of the modified kraft lignin exceeds 30 %.

US 9,000,075 B2 discloses a composition comprising the reaction product resulting from a transesterification reaction between a hydroxypropyl lignin and a polyester. Disadvantages of such compositions include the need of extraordinary conditions, e.g. the employment of catalysts, suitable for formation of covalent bonds in the stage of the manufacturing process when the hydroxypropyl lignin and the polyester is brought in close proximity.

In ACS Sustainable Chem. Eng. 2020, 8, 5338-5346, Xiong *et al.* discloses biodegradable PBAT/lignin-composites comprising modified eucalypt hydrothermal lignin. The lignin therein was modified by methylation or in the process of employment of maleic anhydride-graft-PBAT as a compatibilizer. Of the yielded composites comprising 40 weight-% of the corresponding lignin, a tensile strength reduction and an elongation of break reduction from 21.6 % and 33.2 %, respectively, was observed in comparison to PBAT. Disadvantages of composites of this type, having a lignin content of at least 40 weight-%, include a significant reduction in both tensile strength an elongation of break as compared to PBAT.

### SUMMARY OF THE INVENTION

The present invention discloses one or several solutions on how to overcome one or several of the drawbacks of the prior art as described above.

One aim of the present invention is to present a composition comprising a modified lignin, wherein this composition may be processed using conventional techniques such as extrusion, kneading, film blowing and injection moulding.

Another aim of the present invention is to disclose a composition comprising a modified lignin and a polyester, which composition is having such physical properties that a product made thereof may be used as a substitute for the corresponding product made of the polyester only.

Yet another aim of the present invention is to disclose a composition comprising a modified lignin and a polyester, which composition is having a strain at break or toughness being comparable to or exceeding the corresponding strain at break or toughness, respectively, of the polyester *per-se.*

In a first aspect, the present invention relates to a composition comprising a chemically modified hardwood lignin and a polyester, wherein the chemically modified hardwood lignin is carrying one or several *O*-substituents selected from substituents of Formula I-S to VI-S

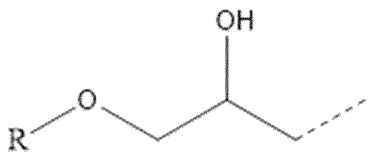

**I-S**

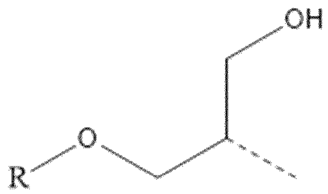

**II-S**

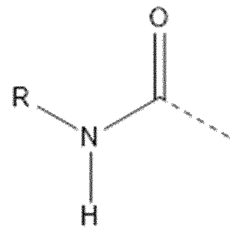

**III-S**

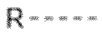

**IV-S**

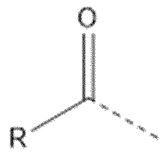

**V-S**

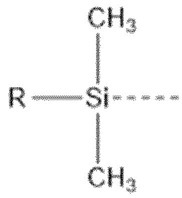

**VI-S**

.

Hydroxyl-groups of the hardwood lignin is substituted and thus carrying one or several of the substituents of Formula I-S to VI-S by means of covalent bonds, indicated by a dashed line, originating at the hydroxyl oxygen atoms of the softwood lignin. R is comprising at least 2 carbon atoms. The polyester is one or several of PET, PLA, PCL, PBT, PEF, PHA, PHB, PBS and PBAT. The chemically modified hardwood lignin constitutes 2 to 90 weight-% of the total weight of said composition.

In a second aspect, the present invention relates to a product which comprises the composition and which may be extruded and/or injection moulded.

In a third aspect, the present invention relates a method of extruding the composition, comprising the steps of mixing the chemically modified hardwood lignin and the polyester and optionally a compatibilizer, to form a mixture; extruding the mixture at a temperature of at least 100°C to form an extruded material; optionally cutting the extruded material into pellets; and optionally drying the extruded material.

In a forth aspect, the present invention relates a method of injection moulding the composition, comprising the steps of: providing pellets or powder of the composition; and injection moulding the pellets or powder into a desired shape at a temperature of at least 100°C.

All the embodiments herein are applicable to all the aspects.

## DETAILED DESCRIPTION OF THE INVENTION

In the present application the term "lignin" means a polymer comprising coumaryl alcohol, coniferyl alcohol and sinapyl alcohol monomers.

In the present application the term "linker" or "linker group" are used interchangeably and means any group which can connect lignin with a chemical group, e.g. a chemical group comprising an alkyl- or alkylene-fragment. It is to be understood that a part of the linker, e.g. an oxygen atom, may originate from lignin to form part of the linker itself after connection of a precursor, e.g. a synthetic intermediate, to lignin.

In the present application the term "compatibilizer" denotes a compound that promotes adhesion between polymers which otherwise are less compatible. Compatibilizers are widely used to increase the miscibility of otherwise

immiscible polymers or polymers that do not mix so well.

In the present application, the term "hardwood lignin" (HWL) is to be understood as a lignin which is derived from hardwood, i.e. from hardwoods (angiosperms).

Softwood and hardwood are distinguished botanically in terms of their reproduction, not by their end use or appearance. All trees reproduce by producing seeds, but the seed structure varies. In general, hardwood comes from a deciduous tree which loses its leaves annually and softwood comes from a conifer, which usually remains evergreen. Hardwoods tend to be slower growing and are therefore usually denser. Softwood trees are known as a gymnosperm. Gymnosperms reproduce by forming cones which emit pollen to be spread by the wind to other trees. A hardwood is an angiosperm, a plant that produces seeds with some sort of covering such as a shell or a fruit.

Examples of hardwood trees include, but is not limited to, trees of genus Triplochiton, Abachi (Triplochiton scleroxylon), trees of genus Acacia, e.g. Acacia acuminate, Acacia amythethophylla, Acacia catechu, Acacia confusa, Acacia erioloba, Acacia galpinii, Acacia goetzii, Acacia karoo, Acacia leucophloea, Acacia melanoxylon, Acacia mellifera subsp. mellifera, Acacia nilotica, Acacia nilotica subsp. adstringens, Acacia nilotica subsp. nilotica, Acacia polyacantha subsp. Campylacantha, Silver wattle (Acacia dealbata), Acacia sieberiana and Robinia pseudoacacia, trees from genus Alder (Alnus), e.g. Black alder (Alnus glutinosa) and Red alder (Alnus rubra)), tress from genus Ash (Fraxinus), e.g. Black ash (Fraxinus nigra), Blue ash (Fraxinus quadrangulata), Common ash (Fraxinus excelsior), Green ash (Fraxinus pennsylvanica), Oregon ash (Fraxinus latifolia), Pumpkin ash (Fraxinus profunda) and White ash (Fraxinus americana)), trees from genus Aspen (Populus), e.g. Bigtooth aspen (Populus gradidentata), European aspen (Populus tremula), Quaking aspen (Populus tremuloides), trees from genus Distemonanthus, e.g. Ayan, movingui (Distemonanthus benthamianus), tree from genus Ochroma, e.g. Balsa (Ochroma pyramidale), trees from genus Beech (Fagus), e.g. American beech (Fagus grandifolia), (Fagus chienii), Siebold's beech (Fagus crenata), Chinese beech (Fagus engleriana), Taiwan beech (Fagus hayatae), Japanese beech or Japanese blue beech (Fagus japonica), South Chinese beech (Fagus longipetiolata), Shining beech (Fagus lucida), Oriental beech (Fagus orientalis), European beech (Fagus sylvatica) and Crimean beech (Fagus × taurica), trees from genus Basswood or linden (Tilia), e.g. American basswood (Tilia americana) and White basswood (Tilia heterophylla), trees from genus Birch (Betula), e.g. Betula albosinensis, Betula alnoides, Betula ashburneri, Betula baschkirica, Betula bomiensis, Betula browicziana, Betula calcicole, Betula celtiberica, Betula chichibuensis, Betula chinensis, Betula coriaceifolia, Betula corylifolia, Betula costata, Betula cylindrostachya, Betula dahurica, Betula delavayi, Betula ermanii, Betula falcata, Betula fargesii, Betula fruticosa, Betula globispica, Betula gmelinii, Betula grossa, Betula gynoterminalis, Betula honanensis, Betula humilis, Betula insignis, Betula karagandensis, Betula klokovii, Betula kotulae, Betula luminifera, Betula maximowiczii, Betula medwediewii, Betula megrelica, Betula microphylla, Betula nana, Betula pendula, Betula platyphylla, Betula potamophila, Betula potaninii, Betula psammophila, Betula pubescens, Betula raddeana, Betula saksarensis, Betula saviczii, Betula schmidtii, Betula sunanensis, Betula szechuanica, Betula tianshanica, Betula utilis, Betula wuyiensis, Betula zinserlingii, Betula alleghaniensis, Betula cordifolia, Betula glandulosa, Betula lenta, Betula michauxii, Betula minor, Betula murrayana, Betula nana, Betula neoalaskana, Betula nigra, Betula occidentalis, Betula papyrifera, Betula populifolia, Betula pumila and Betula uber, tree from genus Castanospermum, e.g. Blackbean (Castanospermum australe), trees from the genus Brosimum, e.g. Bloodwood (Brosimum rubescens), trees from genus Acer, e.g. Boxelder (Acer negundo), trees from genus Buxus, e.g. Boxwood, common box (Buxus sempervirens), trees from genus Ocotea, e.g. Brazilian walnut (Ocotea porosa), trees from genus Caesalpinia, e.g. Brazilwood (Caesalpinia echinata), trees from genus Aesculus, e.g. Horsechestnut (Aesculus hippocastanum), Ohio buckeye (Aesculus glabra) and Yellow buckeye (Aesculus flava), trees from genus Juglans, e.g. Butternut (Juglans cinerea), trees from genus Umbellularia, e.g. California bay laurel (Umbellularia californica), trees from genus Cinnamomum, e.g. Camphor tree (Cinnamomum camphora), trees from genus Calodendrum, e.g. Cape chestnut (Calodendrum capense), trees from genus Catalpa, e.g. Catalpa bungei, Catalpa brevipes and Catalpa bignonioides, trees from genus Chloroxylon, e.g. Ceylon satinwood (Chloroxylon swietenia), trees from genus Cherry (Prunus), e.g. Black cherry (Prunus serotina), Red cherry (Prunus pensylvanica) and Wild cherry (Prunus avium), trees from genus Chestnut (Castanea spp.),e.g. Chestnut (Castanea sativa) and American Chestnut (Castanea dentata), trees from genus Ceratopetalum, e.g. Coachwood (Ceratopetalum apetalum), trees from genus Leitneria, e.g. Corkwood (Leitneria floridana), trees from genus Magnolia, e.g. Cucumbertree (Magnolia acuminata), trees from genus Dipteryx, e.g. Dipteryx alata, trees from genus Dogwood (Cornus), e.g. Flowering dogwood (Cornus florida) and Pacific dogwood (Cornus nuttallii), trees from genus Ebony (Diospyros), e.g. Andaman marblewood (Diospyros kurzii), Ebène marbre (Diospyros melanida), African ebony (Diospyros crassiflora) and Ceylon ebony (Diospyros ebenum), trees from genus Elm (Ulmus), e.g. American elm (Ulmus americana), English elm (Ulmus procera), Rock elm (Ulmus thomasii), Slippery elm, red elm (Ulmus rubra) and Wych elm (Ulmus glabra)), trees from genus Eucalyptus (Eucalyptus), e.g. Lyptus a hybrid of Flooded gum (Eucalyptus grandis) and Timor white gum (Eucalyptus urophylla), White mahogany (Eucalyptus acmenoides), Brown mallet (Eucalyptus astringens), Banglay, southern mahogany (Eucalyptus botryoides), River red gum (Eucalyptus camaldulensis), Karri (Eucalyptus diversicolor), Blue gum (Eucalyptus globulus), Flooded gum or rose gum (Eucalyptus grandis), York gum (Eucalyptus loxophleba), Jarrah (Eucalyptus marginata), Tallowwood (Eucalyptus microcorys), Grey ironbark (Eucalyptus paniculata), Blackbutt (Eucalyptus pilularis), Mountain ash (Eucalyptus regnans),

Australian oak (Eucalyptus obliqua), Alpine ash (Eucalyptus delegatensis), Red mahogany (Eucalyptus resinifera), Swamp mahogany (Eucalyptus robusta), Sydney blue gum (Eucalyptus saligna), Mugga or red ironbark (Eucalyptus sideroxylon), Redwood (Eucalyptus transcontinentalis) and Wandoo (Eucalyptus wandoo), trees from genus Malus, e.g. European crabapple (Malus sylvestris), trees from genus Pyrus, e.g. European pear (Pyrus communis), trees from genus Gonçalo alves (Astronium), e.g. Astronium balansae, Astronium concinnum, Astronium conzattii, Astronium fraxinifolium, Astronium gardneri, Astronium glaziovii, Astronium graveolens, Astronium lecointei, Astronium mirandae, Astronium nelson-rosae, Astronium obliquum and Astronium ulei, Astronium urundeuva), trees from genus Chlorocardium, e.g. Greenheart (Chlorocardium rodiei), trees from genus Dalbergia, e.g. Grenadilla (Dalbergia melanoxylon), Jacarandá de Brasil (Dalbergia nigra), Kingwood (Dalbergia cearensis), Cocobolo (Dalbergia retusa) and Thailand rosewood (Dalbergia cochinchinensis), trees from genus Calophyllum, e.g. Guanandi (Calophyllum brasiliense), trees from genus Bursera, e.g. Gumbo limbo (Bursera simaruba), trees from genus Celtis, e.g. Hackberry (Celtis occidentalis), trees from genus Hickory (Carya), e.g. Pecan (Carya illinoinensis), Pignut hickory (Carya glabra), Shagbark hickory (Carya ovata) and Shellbark hickory (Carya laciniosa), trees from genus Hornbeam (Carpinus), e.g. American hophornbeam (Ostrya virginiana)), trees from genus Ipê (Handroanthus), Handroanthus albus, Handroanthus billbergii, Handroanthus chrysanthus, Handroanthus chrysotrichus, Handroanthus guayacan, Handroanthus heptaphyllus, Handroanthus impetiginosus, Handroanthus incanus, Handroanthus lapacho, Handroanthus ochraceus, Handroanthus serratifolius, Handroanthus subtilis, Handroanthus umbellatus and Handroanthus vellosoi, trees from genus Milicia, African teak (Milicia excelsa), trees from genus Carpinus, e.g. American hornbeam (Carpinus caroliniana), trees from genus Casuarina, e.g. Polynesian ironwood (Casuarina equisetifolia), trees from genus Choricarpia, e.g. Giant ironwood (Choricarpia subargentea), trees from genus Copaifera, e.g. Diesel tree (Copaifera langsdorffii), trees from genus Eusideroxylon, e.g. Borneo ironwood (Eusideroxylon zwageri), trees from genus Guaiacum, e.g. Guaiacwood (Guaiacum officinale) and Holywood (Guaiacum sanctum), trees from genus Hopea, e.g. Takian (Hopea odorata), trees from genus Krugiodendron, e.g. Black ironwood (Krugiodendron ferreum), trees from genus (Olea), e.g. Black ironwood (Olea capensis), trees from genus Androstachys, e.g. Lebombo ironwood (Androstachys johnsonii), trees from genus Lyonothamnus, e.g. Catalina ironwood (Lyonothamnus floribundus), trees from genus Mesua, e.g. Ceylon ironwood (Mesua ferrea), trees from genus Olneya, e.g. Desert ironwood (Olneya tesota), trees from genus Parrotia, e.g. Persian ironwood (Parrotia persica), trees from genus Caesalpinia, e.g. Brazilian ironwood (Caesalpinia ferrea), trees from genus Tabebuia, e.g. Yellow lapacho (Tabebuia serratifolia), trees from genus Jacaranda, e.g. Jacaranda-boca-de-sapo (Jacaranda brasiliana), trees from genus Hymenaea, e.g. Jatobá (Hymenaea courbaril), trees from genus Cardwellia, e.g. Northern silky oak (Cardwellia sublimis), trees from genus Platanus, e.g. American sycamore (Platanus occidentalis) and London plane (Platanus × acerifolia), trees from genus Terminalia, e.g. Limba (Terminalia superba), trees from genus Locust (Robina), e.g. Black locust (Robinia pseudoacacia), trees from genus Gleditsia, e.g. Honey locust (Gleditsia triacanthos), trees from genus Swietenia, e.g. West Indies mahogany (Swietenia mahagoni), Bigleaf mahogany (Swietenia macrophylla), Pacific Coast mahogany (Swietenia humilis), trees from genus African mahogany (Khaya), e.g. Khaya anthotheca, Khaya grandifoliola, Khaya ivorensis, Khaya madagascariensis and Khaya senegalensis, trees from genus Toona, e.g. Chinese mahogany (Toona sinensis), Australian red cedar (Toona ciliata) and Philippine mahogany (Toona calantas), Indonesian mahogany (Toona sureni), trees from genus Sapele (Entandrophragma cylindricum), Sipo (Entandrophragma utile), Tiama, (Entandrophragma angolense), Kosipo, (Entandrophragma candollei), Mountain mahogany (Entandrophragma caudatumi), trees from genus Chukrasia, e.g. Indian mahogany (Chukrasia velutina), trees from genus Cedrela, e.g. Spanish Cedar or Brazilian mahogany (Cedrela odorata), trees from genus Guarea, e.g. Light bosse (Guarea cedrata), Dark bosse (Guarea thompsonii) and American muskwood (Guarea grandifolia), trees from genus Carapa, e.g. Carapa (Carapa guianensis), trees from genus Melia, e.g. Bead-tree (Melia azedarach), trees from genus Maple (Acer), e.g. Sugar maple (Acer saccharum), Black maple (Acer nigrum), Boxelder (Acer negundo), Red maple (Acer rubrum), Silver maple (Acer saccharinum) and Sycamore maple (Acer pseudoplatanus), trees from genus Marmaroxylon, e.g. Marblewood (Marmaroxylon racemosum), trees from genus Corymbia, e.g. Red gum (Corymbia calophylla), trees from genus Shorea, e.g. Shorea robusta and Shorea argentifolia, trees from genus Intsia, e.g. Merbau (Intsia bijuga), trees from genus Colophospermum, e.g. Mopane (Colophospermum mopane), trees from genus Oak (Quercus), e.g. White oak (Quercus alba), Bur oak (Quercus macrocarpa), Post oak (Quercus stellata), Swamp white oak (Quercus bicolor), Southern live oak (Quercus virginiana), Swamp chestnut oak (Quercus michauxii), Chestnut oak (Quercus prinus), Chinkapin oak (Quercus muhlenbergii), Canyon live oak (Quercus chrysolepis), Overcup oak (Quercus lyrata), English oak (Quercus robur), Northern red oak (Quercus rubra), Eastern black oak (Quercus velutina), Laurel oak (Quercus laurifolia), Southern red oak (Quercus falcata), Water oak (Quercus nigra), Willow oak (Quercus phellos) and Nuttall's oak (Quercus texana), trees from genus Aucoumea, e.g. Okoumé (Aucoumea klaineana),trees from genus Olea, e.g. Olive (Olea europaea), trees from genus Berchemia, e.g. Pink ivory (Berchemia zeyheri), trees from genus Poplar (Populus), e.g. Eastern cottonwood (Populus deltoides), Swamp cottonwood (Populus heterophylla), Balsam poplar (Populus balsamifera), Black poplar (Populus nigra), Hybrid black poplar (Populus × canadensis), Populus nigra and Populus deltoides, trees from genus Purpleheart (Peltogyne), e.g. Peltogyne altissima, Peltogyne angustiflora, Peltogyne campestris, Peltogyne catingae, Peltogyne confertiflora, Peltogyne discolor, Peltogyne excelsa, Peltogyne floribunda, Peltogyne gracilipes, Peltogyne

heterophylla, Peltogyne lecointei, Peltogyne maranhensis, Peltogyne mattosiana, Peltogyne mexicana, Peltogyne paniculata, Peltogyne paradoxa, Peltogyne parvifolia, Peltogyne pauciflora, Peltogyne prancei, Peltogyne purpurea, Peltogyne recifensis, Peltogyne subsessilis and Peltogyne venosa, trees from genus Flindersia, e.g. Queensland maple (Flindersia brayleyana), trees from genus Endiandra, e.g. Queensland walnut (Endiandra palmerstonii), trees from genus Ramin (Gonystylus),e.g. Gonystylus acuminatus, Gonystylus affinis, Gonystylus areolatus, Gonystylus augescens, Gonystylus bancanus, Gonystylus borneensis, Gonystylus brunnescens, Gonystylus calophylloides, Gonystylus calophyllus, Gonystylus confuses, Gonystylus consanguineous, Gonystylus costalis, Gonystylus decipiens, Gonystylus eximius, Gonystylus forbesii, Gonystylus glaucescens, Gonystylus keithii, Gonystylus lucidulus, Gonystylus macrocarpus, Gonystylus macrophyllus, Gonystylus maingayi, Gonystylus micranthus, Gonystylus nervosus, Gonystylus nobilis, Gonystylus othmanii, Gonystylus pendulus, Gonystylus punctatus, Gonystylus reticulatus, Gonystylus spectabilis, Gonystylus stenosepalus, Gonystylus velutinus and Gonystylus xylocarpus), trees from genus Erythroxylon, e.g. Redheart, chakté-coc (Erythroxylon mexicanum), trees from genus Liquidambar, e.g. Sweetgum (Liquidambar styraciflua), trees from genus Sandalwood (Santalum), e.g. Indian sandalwood (Santalum album), trees from genus Sassafras, e.g. Sassafras (Sassafras albidum) trees from genus Atherosperma, e.g. Southern sassafras (Atherosperma moschatum), trees from genus Brosimum, e.g. Satiné, satinwood (Brosimum rubescens), trees from genus Grevillea, e.g. Silky oak (Grevillea robusta), trees from genus Oxydendrum, e.g. Sourwood (Oxydendrum arboretum), trees from genus Cedrela, e.g. Spanish-cedar (Cedrela odorata), trees from genus Cordia, e.g. Spanish elm (Cordia alliodora), trees from genus Spirostachys, e.g. Tamboti (Spirostachys africana), trees from genus Tectona, e.g. Teak (Tectona grandis), trees from genus Tupelo (Nyssa), e.g. Black tupelo (Nyssa sylvatica), trees from genus Liriodendron, e.g. Tulip tree (Liriodendron tulipifera), trees from genus Syncarpia, e.g. Turpentine (Syncarpia glomulifera), trees from genus Walnut (Juglans), e.g. Eastern black walnut (Juglans nigra), Common walnut (Juglans regia)), trees from genus Willow (Salix), e.g. Black willow (Salix nigra), Cricket-bat willow (Salix alba 'Caerulea'), White willow (Salix alba) and Weeping willow (Salix babylonica), trees from genus Microberlinia, e.g. African zebrawood (Microberlinia brazzavillensis).

In the present application, the term "hardwood kraft lignin" (HWKL) is to be understood as a subset of HWL, wherein the HWKL is produced by taking the black liquor from the Kraft process and precipitating the lignin by lowering the pH, as well known to the skilled person, according to, for example, the Lignoboost process, the SLRP process or the LignoForce process.

In the present application, the term "hardwood organosolv lignin" (HWOL) is to be understood as a subset of HWL, wherein the HWOL is produced by extraction of lignin and hemicelluloses from the wood with help of an organic solvent, such as e.g. acetone, methanol, ethanol, butanol, ethylene glycol, formic acid or acetic acid, as well known by the skilled person. The wood may be pretreated with base, acid or enzyme (cellulases). The lignin may be separated from the solvent and hemicelluloses by precipitation, e.g. by adding water and sometimes also by lowering the pH simultaneously.

In the present application, the term "hardwood soda pulping lignin" (HWSPL) is to be understood as a subset of HWL, wherein the HWSPL is produced by precipitation of the black liquor the soda pulping process and lowering the pH, e.g. according to the Lignoboost process, the SLRP process or the LignoForce process, as well known to the skilled person.

<u>Lignin</u>

The lignin, useful for the production of a composition of the present invention, may be obtained from any suitable form of hardwood, such as e.g. saw dust or wood chips. An illustration of lignin, comprising the text "LIG", is depicted below (hydroxyl groups not shown).

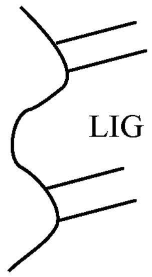

It is preferred that the hardwood contains as much lignin as possible. The Kappa number estimates the amount of chemicals required during bleaching of wood pulp in order to obtain a pulp with a given degree of whiteness. Since the amount of bleach needed is related to the lignin content of the pulp, the Kappa number can be used to monitor the effectiveness of the lignin-extraction phase of the process. It is approximately proportional to the residual lignin content of the pulp.

$$K \approx c^*l$$

K: Kappa number; c: constant ≈ 6.57 (dependent on process and); l: lignin content in percent. The Kappa number is determined by ISO 302:2004. The kappa number may be 20 or higher, or 40 or higher, or 60 or higher. In one embodiment, the kappa number is 10-100.

The hardwood material may be a mixture of hardwood materials and in one embodiment the hardwood material is black or red liquor, or materials obtained from black or red liquor. Black and red liquor contains cellulose, hemi cellulose and lignin and derivatives thereof. The HWL useful for the production of a composition of the present invention, may comprise black or red liquor, or lignin obtained from black or red liquor.

Black liquor comprises four main groups of organic substances, around 30-45 weight% ligneous material, 25-35 weight% saccharine acids, about 10 weight% formic and acetic acid, 3-5 weight% extractives, about 1 weight% methanol and many inorganic elements and sulphur. The exact composition of the liquor varies and depends on the cooking conditions in the production process and the feedstock. Red liquor comprises the ions from the sulfite process (calcium, sodium, magnesium or ammonium), sulfonated lignin, hemicellulose and low molecular resins.

The lignin, useful for the production of a composition of the present invention, is essentially a HWL, such as for example a HWKL. In one embodiment, the lignin may be a HWL selected from the group of HWL's consisting of Lignoboost® lignin, precipitated lignin, filtrated lignin, acetosolv lignin, lignin from soda pulping or organosolv lignin. In one embodiment the lignin may be HWKL, acetosolv lignin or organosolv lignin. In another embodiment the lignin may be HWKL. In another embodiment the lignin may be organosolv lignin. In another embodiment the lignin may be obtained as a residual material from ethanol production. The lignin may be in particulate form with a particle size of 5 mm or less, or 1 mm or less.

Native lignin or Kraft lignin is not soluble in most organic solvents, fatty acids or oils. Instead prior art has presented various techniques to depolymerize and covert the depolymerized lignin into components soluble in the wanted media.

The weight average molecular weight (mass) ($M_w$) of the lignin, useful for the production of a composition of the present invention, may be 30,000 g/mol or less, such as not more than 20,000 g/mol, or not more than 10,000 g/mol, or not more than 5,000 g/mol, or not more than 2,000 g/mol, but preferably higher than 1,000 g/mol, or higher than 1,200 g/mol, or higher than 1,500 g/mol. In one embodiment the number average molecular weight of the lignin is between 1,000 and 4,000 g/mol, or between 1,500 and 3,500 g/mol.

Modified or derivatized lignin

The lignin, useful for the production of a composition of the present invention, is essentially modified or derivatized with a chemical group R comprising at least 2 carbon atoms, such as at least 4 carbon atoms. The group R may be, but is not limited to, an alkyl group, such as e.g. $C_{10}$-$C_{20}$-alkyl or $C_{12}$-$C_{17}$-alkyl, an aryl group, such as phenyl, or $-(CH_2CH_2O)_nCH_2CH_2O$-alk, wherein n is 1 to 180 and alk is H, methyl or ethyl . The group R may be saturated, unsaturated, straight, branched, cyclic and it may be further substituted with small substituents, such as e.g. OH, NH2, COOH, COO-alkyl or methyl. The group R is essentially connected to the lignin via a linker group L, comprising 0 to 3 carbon atoms, 1 to 3 oxygen atoms and 0 to 1 nitrogen atoms. The linker group L may be derived from a hydroxyl group of the lignin. Hence, the linker L may comprise an oxygen-atom, which typically may originate from the original lignin. The linker L may be connected to an aryl group or an aliphatic part on the lignin according to the schematic chemical structures 1 and 2:

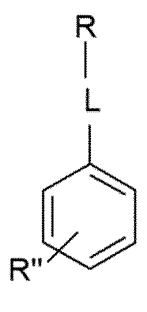

1

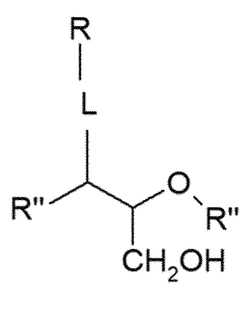

2

In formula 1 and 2 above, the lignin is schematically represented by the R" and the aryl or aliphatic groups

respectively, L is the linker and R is a chemical group as mentioned and explained herein. Since lignin has aliphatic hydroxyl groups as well as aromatic hydroxyl groups, the linker L may be attached to an aliphatic part of lignin (structure 2). The linker L may also be connected direct to the aryl group in lignin (structure 1). R" may be hydrogen, alkyl, aryl or alkoxy group or any other group found in lignin. The aryl group of the lignin may comprise more than one R". Hence, the composition of the invention essentially comprise a HWL, which is derivatized by being covalently bond to substituent R, connected to the HWL via linker L, in which the substituent R comprise at least 2 carbon atoms, such as at least 4 carbon atoms.

The degree of modification of the hydroxyl groups of the lignin, useful for the production of a composition of the present invention, may be expressed as number of equivalents to lignin repeating units (eq/ru). The number of equivalents may be 0.01 or higher, 0.05 or higher, 0.1 or higher, 0.2 or higher, or 0.4 or higher, or 0.6 or higher, or 0.8 or higher. In this application the repeating unit of lignin is assumed to have a molecular weight of 180g/mol. The degree of modification of the lignin when the lignin is chemically modified may be quite low and still be miscible with the first polymer. In one embodiment the number of equivalents may be 0.01-0.2, such as 0.02-0.1, 0.03-0.1 or 0.03-0.06.

The lignin, useful for the production of a composition of the present invention, is essentially a HWL, such as for example a HWKL, a HWOL or a HWSPL.

According to one embodiment, the linker L may be a chemical group comprising 3 carbon atoms and 3 oxygen atoms. For example, the lignin, e.g. a HWKL, a HWOL or a HWSPL, may be modified with groups R linked to the lignin via an alkylene glycol linkage, i.e. a -OCH2CH(OH)CH2O- group as depicted in Formula I or a - OCH2CH(CH2OH)O- group as depicted in Formula II. The linker L of the modified lignin may be O-substituted at one of the oxygen atoms with the group R. The oxygen atom of the linker L, being bond to or part of lignin in the modified lignin, may originate from the original lignin, i.e. lignin prior to any modification yielding modified lignin. Alternatively, the oxygen atom of the linker L, being bond to or part of lignin in the modified lignin, may originate from a chemical reactant, from which the linker L is formed upon chemical reaction with lignin.

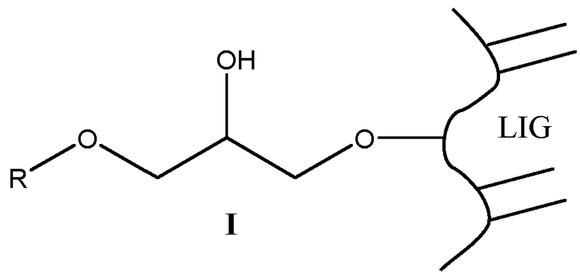

I

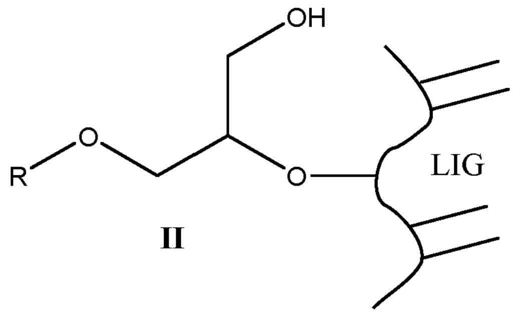

II

The modified lignin of formula I or II, may be produced or synthesized by the reaction between a compound according to formula SM2 and lignin (hydroxyl groups not shown) as depicted below. The compound according to formula SM2 may be synthesized directly by reaction of a compound according to formula SM1 and epichlorohydrin, or alternatively via the corresponding epoxide opened product followed by intra-molecular re-formation of the epoxide by displacement of the intermediate chloride, as well known in the art and as depicted below. The compound according to formula SM2 may also be synthesized by O-allylation of the compound of formula SM1, e.g. with allyl bromide, followed by oxidation, e.g. with a peracid, as well known in the art. The compound according to formula SM2 may be generated in situ in presence of lignin, when producing or synthesizing a modified lignin of formula I or II of the present invention.

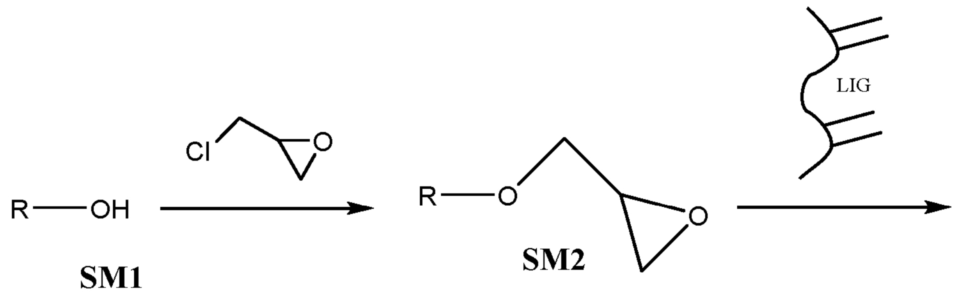

SM1 SM2 I, II

The R-group of the modified HWL according to formula I or formula II of the present invention may be a straight, cyclic, branched, saturated or unsaturated alkyl group comprising 4 to 36 carbon atoms, such as e.g. 4 to 25, 14 to 18, 12 to 15 or 12 to 14 carbon atoms. The R-group of the modified HWL according to formula I or formula II of the present invention

may be independently selected from the group consisting of saturated alkyl, unsaturated alkyl, straight alkyl, branched alkyl and cyclic alkyl. Such an alkyl group may be further substituted with substituents independently selected from the group consisting of -OH, aryl and phenyl. Such an alkyl group may further incorporate one or more fragment selected from the group of fragments selected from -COO-, -S- and -O-. The R-group of the modified HWL according to formula I or formula II of the present invention may be independently selected from the group consisting of phenyl, ortho-methyl phenyl, para-methyl phenyl, cyclohexyl, 4-tertbutyl phenyl, 2-ethyl hexyl, cardanyl and nonylphenyl. The R-group of the modified HWL according to formula I or formula II of the present invention may be independently selected from the group consisting of compounds of formula S1, S2, S3, S4, S5 and S6 as depicted below. The integer n of compounds of formula S1, S2, S3, S4, S5 and S6 may be 1-180, 1-100, 1-50, 1-25, 1-10, 1-5 or 1-2.

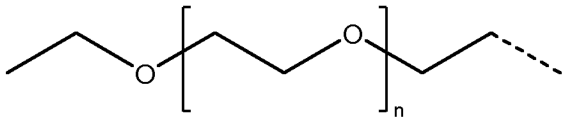

S1

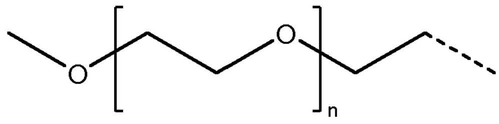

S2

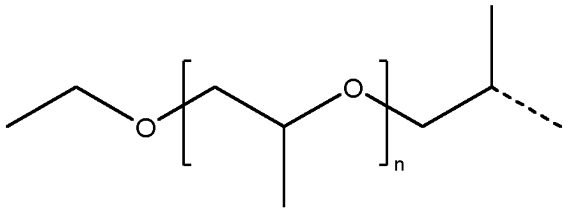

S3

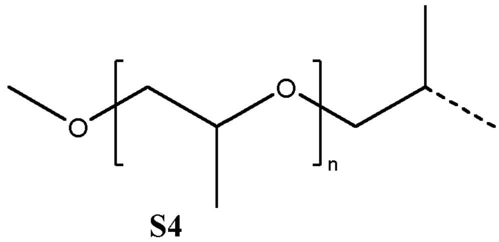

S4

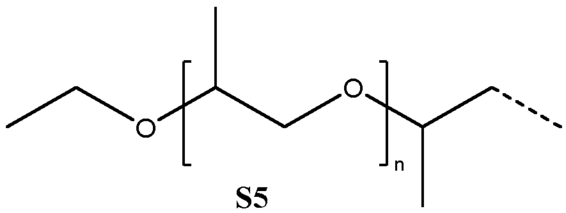

S5

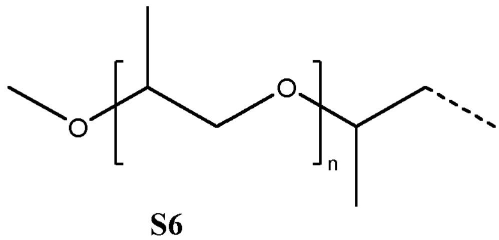

S6

The R-group of the modified HWL according to formula I or formula II of the present invention may comprise a plurality of different R-groups. For example, such modified lignin may be prepared as taught herein from reaction with 2 to 20%, such as 6%, cresyl glycidyl ether and 2 to 15%, such as 6%, $C_{12}$-$C_{14}$-glycidyl ether.

According to one embodiment, the linker L may comprise 1 carbon atom, one nitrogen atom and 2 oxygen atoms, such as e.g. when being a carbamate group. For example, the lignin, e.g. a HWKL, a HWOL or a HWSPL, may be modified with groups R linked to the lignin via a carbamate moiety, i.e. a -NHC(=O)O- group as depicted in formula III. The oxygen atom of the linker L, being bond to or part of lignin in the modified lignin, may originate from the original lignin, i.e. lignin prior to any modification yielding modified lignin. Alternatively, the oxygen atom of the linker L, being bond to or part of lignin in the modified lignin, may originate from a chemical reactant, from which the linker L is formed upon chemical reaction with lignin.

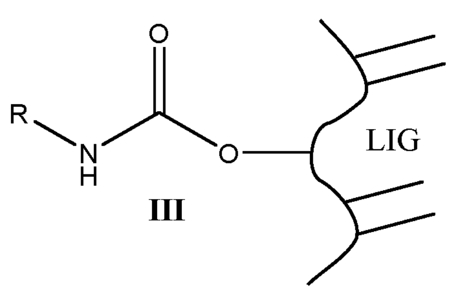

III

The modified lignin of formula III, may be produced or synthesized by the reaction between an isocyanate according to formula SM3 and lignin (hydroxyl groups not shown) as depicted below. US3072634 (A) discloses examples

of detailed descriptions on the synthesis of compounds according to formula III.

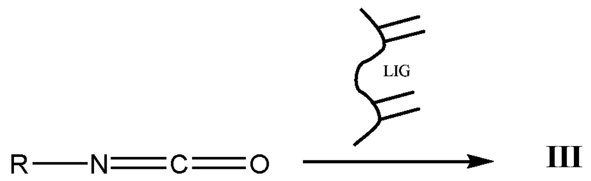

SM3

The R-group of the modified HWL according to formula III of the present invention may be a straight, cyclic, branched, saturated or unsaturated alkyl group comprising 4 to 36 carbon atoms, such as e.g. 4 to 25, 14 to 18, 12 to 15 or 12 to 14 carbon atoms, benzyl and phenyl. Such an R-group may be further substituted with substituents independently selected from the group consisting of, aryl, phenyl and ester. Such an R-group may further incorporate one or more fragment selected from the group of fragments selected from -COO-, -S- and -O-. The R-group of the modified HWL according to formula III of the present invention may be independently selected from the group consisting of phenyl, cyclohexyl and octadecyl. The R-group of the modified HWL according to formula III of the present invention may be independently selected from the group consisting of compounds of formula S1, S2, S3, S4, S5 and S6 as depicted above. The integer n of compounds of formula S1, S2, S3, S4, S5 and S6 may be 1-180, 1-100, 1-50, 1-25, 1-10, 1-5 or 1-2.

The R-group of the modified HWL according to formula III of the present invention may comprise a plurality of different R-groups. Such a plurality may be selected from two, three or more R-groups from the list consisting of saturated alkyl, unsaturated alkyl, straight alkyl, branched alkyl and cyclic alkyl. The alkyl group may be further substituted with substituents independently selected from the group consisting of aryl and phenyl. The alkyl group may incorporate one or more fragment selected from the group of fragments selected from -COO-, -S- and -O-.

According to one embodiment, the linker L may be an oxygen atom. For example, the lignin, e.g. a HWKL, a HWOL or a HWSPL, may be modified with groups R linked to the lignin via an oxygen atom, i.e. a -O- group as depicted in formula IV. The oxygen atom of the linker L, being bond to or part of lignin in the modified lignin, may originate from the original lignin, i.e. lignin prior to any modification yielding modified lignin. Alternatively, the oxygen atom of the linker L, being bond to or part of lignin in the modified lignin, may originate from a chemical reactant, from which the linker L is formed upon chemical reaction with lignin.

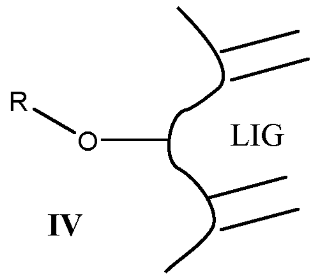

IV

The modified lignin of formula IV, may be produced or synthesized by the reaction between an electrophile according to formula SM4, carrying a leaving group X, e.g. chloride, bromide, mesylate or the like, and lignin (hydroxyl groups not shown) as depicted below. In Ind. Eng. Chem. Res. 2012, 51, 51, 16713-16720, syntheses of compounds of formula IV are disclosed.

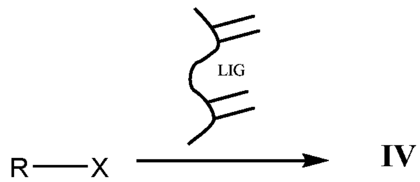

SM4

The R-group of the modified HWL according to formula IV of the present invention may be a straight, cyclic, branched, saturated or unsaturated alkyl group comprising 4 to 36 carbon atoms, such as e.g. 4 to 25, 14 to 18, 12 to 15 or 12 to 14 carbon atoms. The R-group of the modified HWL according to formula IV of the present invention may be saturated

alkyl, unsaturated alkyl, straight alkyl, branched alkyl and cyclic alkyl. Such an R-group may be further substituted with substituents independently selected from the group consisting of aryl and phenyl. Such an R-group may further incorporate one or more fragment selected from the group of fragments selected from -COO-, -S- and -O-. The R-group of the modified HWL according to formula IV of the present invention may be independently selected from the group consisting of benzyl, ortho-methyl benzyl, para-methyl benzyl, cyclohexyl, 4-tertbutyl benzyl, 2-ethyl hexyl and nonylphenyl. The R-group of the modified HWL according to formula IV of the present invention may be independently selected from the group consisting of compounds of formula S1, S2, S3, S4, S5 and S6 as depicted above. The integer n of compounds of formula S1, S2, S3, S4, S5 and S6 may be 1-180, 1-100, 1-50, 1-25, 1-10, 1-5 or 1-2.

The R-group of the modified HWL according to formula IV of the present invention may comprise a plurality of different R-groups. Such a plurality may be selected from two, three or more R-groups from the list consisting of saturated alkyl, unsaturated alkyl, straight alkyl, branched alkyl and cyclic alkyl. The alkyl group may be further substituted with substituents independently selected from the group consisting of aryl, phenyl, benzyl and allyl. The alkyl group may incorporate one or more fragment selected from the group of fragments selected from -COO-, -S- and - O-.

According to one embodiment, the linker L may comprise 1 carbon atom and two oxygen atoms, such as e.g. when being an ester group. For example, the lignin, e.g. a HWKL, a HWOL or a HWSPL, may be modified with groups R linked to the lignin via an ester moiety, i.e. a -C(=O)O- group as depicted in formula V. The oxygen atom of the linker L, being bond to or part of lignin in the modified lignin, may originate from the original lignin, i.e. lignin prior to any modification yielding modified lignin. Alternatively, the oxygen atom of the linker L, being bond to or part of lignin in the modified lignin, may originate from a chemical reactant, from which the linker L is formed upon chemical reaction with lignin.

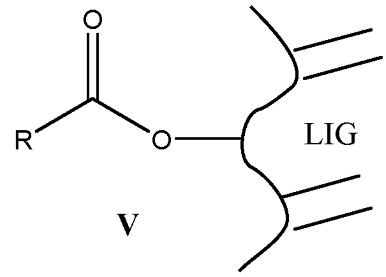

V

The modified lignin of formula V may be produced or synthesized by the reaction between a compound according to formula SM5, SM6 or SM7 and lignin (hydroxyl groups not shown) as depicted below. In US2016355535A, it is taught how compounds according to formula V may be synthesized from the corresponding lignin.

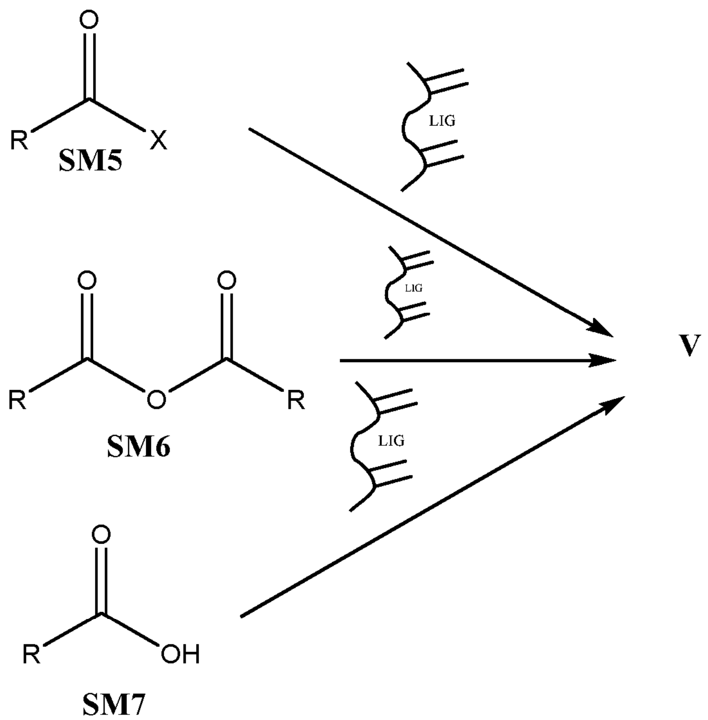

The R-group of the modified HWL according to formula V of the present invention may be a straight, cyclic, branched, saturated or unsaturated alkyl group comprising 4 to 36 carbon atoms, such as e.g. 4 to 25, 14 to 18, 12 to 15 or 12 to 14 carbon atoms. The R-group of the modified HWL according to formula V of the present invention may be saturated alkyl, unsaturated alkyl, straight alkyl, branched alkyl and cyclic alkyl. Such an alkyl group may be further substituted with substituents independently selected from the group consisting of aryl, phenyl, benzyl and allyl. Such an R-group may be further substituted with substituents independently selected from the group consisting of aryl and phenyl. Such an R-group may further incorporate one or more fragment selected from the group of fragments selected from -COO-, -S- and -O-. The R-group of the modified HWL according to formula V of the present invention may be independently selected from the group consisting of phenyl, ortho-methyl phenyl, para-methyl phenyl, cyclohexyl, 4-tertbutyl phenyl, 2-ethyl hexyl, octadecyl and benzyl. The R-group of the modified HWL according to formula V of the present invention may be independently selected from the group consisting of compounds of formula S1, S2, S3, S4, S5 and S6 as depicted above. The integer n of compounds of formula S1, S2, S3, S4, S5 and S6 may be 1-180, 1-100, 1-50, 1-25, 1-10, 1-5 or 1-2.

The R-group of the modified HWL according to formula V of the present invention may comprise a plurality of different R-groups. Such a plurality may be selected from two, three or more R-groups from the list consisting of saturated alkyl, unsaturated alkyl, straight alkyl, branched alkyl and cyclic alkyl. The alkyl group may be further substituted with substituents independently selected from the group consisting of aryl, phenyl, benzyl and allyl. The alkyl group may incorporate one or more fragment selected from the group of fragments selected from -COO-, -S- and - O-.

According to one embodiment, the linker L may comprise 2 carbon atoms and one oxygen atom, such as when being a dimethylsilyloxy group. For example, the lignin, e.g. a HWKL, a HWOL or a HWSPL, may be modified with groups R linked to the lignin via a dimethylsilyloxy moiety, i.e. a $-Si(Me)_2O-$ group as depicted in formula VI. The oxygen atom of the linker L, being bond to or part of lignin in the modified lignin, may originate from the original lignin, i.e. lignin prior to any modification yielding modified lignin. Alternatively, the oxygen atom of the linker L, being bond to or part of lignin in the modified lignin, may originate from a chemical reactant, from which the linker L is formed upon chemical reaction with lignin.

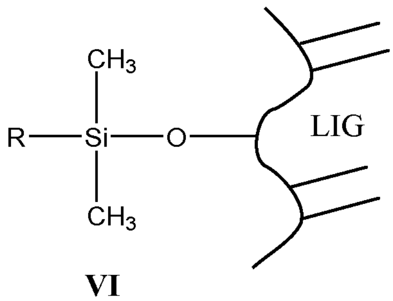

VI

The modified lignin of formula VI may be produced or synthesized by the reaction between a compound according to formula SM8, in which X may be a halide such as e.g. Cl, and lignin (hydroxyl groups not shown) as depicted below. In ACS Sustainable Chem. Eng. 2016, 4, 10, 5212-5222 it is taught how a compound of formula VI may be synthesized from the corresponding lignin.

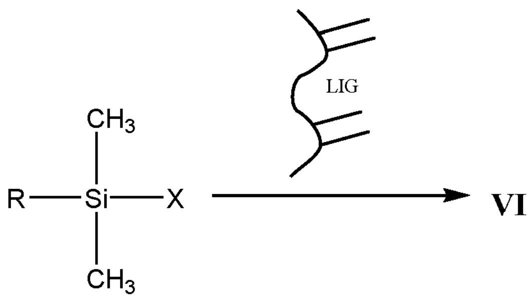


SM8

The R-group of the modified HWL according to formula VI of the present invention may be a straight, cyclic, branched, saturated or unsaturated alkyl group comprising 4 to 36 carbon atoms, such as e.g. 4 to 25, 14 to 18, 12 to 15 or 12 to 14 carbon atoms. The R-group of the modified HWL according to formula VI of the present invention may be saturated alkyl, unsaturated alkyl, straight alkyl, branched alkyl and cyclic alkyl. Such an alkyl group may be further substituted with substituents independently selected from the group consisting of aryl, phenyl, benzyl and allyl. Such an R-group may be

further substituted with substituents independently selected from the group consisting of aryl and phenyl. Such an R-group may further incorporate one or more fragment selected from the group of fragments selected from -COO-, -S- and -O-. The R-group of the modified HWL according to formula VI of the present invention may be independently selected from the group consisting of phenyl, ortho-methyl phenyl, para-methyl phenyl, tertbutyl, methyl, cyclohexyl, 4-tertbutyl phenyl, 2-ethyl hexyl, octadecyl, dodecyl and benzyl. The R-group of the modified HWL according to formula VI of the present invention may be independently selected from the group consisting of compounds of formula S1, S2, S3, S4, S5 and S6 as depicted above. The integer n of compounds of formula S1, S2, S3, S4, S5 and S6 may be 1-180, 1-100, 1-50, 1-25, 1-10, 1-5 or 1-2.

The R-group of the modified HWL according to formula VI of the present invention may comprise a plurality of different R-groups. Such a plurality may be selected from two, three or more R-groups from the list consisting of saturated alkyl, unsaturated alkyl, straight alkyl, branched alkyl and cyclic alkyl. The alkyl group may be further substituted with substituents independently selected from the group consisting of aryl, phenyl, benzyl and allyl. The alkyl group may incorporate one or more fragment selected from the group of fragments selected from -COO-, -S- and - O-.

The composition according to the present invention may be prepared by first preparing the lignin that is modified or derivatized with a group R via a linker L, followed by mixing the modified lignin with a polyester, such as e.g. PET, PBAT, PLA, PCL, PBT, PolyEthylene 2,5-Furandicarboxylate (PEF), PolyHydroxyAlkanoate (PHA), PolyHydroxyButyrate (PHB) or PBS. The modification may be done in a suitable solvent. The modified lignin may be isolated from the modification reaction mixture or the modified lignin may be left in the reaction mixture when mixed with the polyester, such as e.g. PET, PBAT, PLA, PCL, PBT, PEF, PHA, PHB or PBS. The mixing can be done by stirring or shaking or in any other suitable way and the slurry may then be heated. Any catalyst and any other unwanted components may be removed afterwards using any suitable technique.

The composition according to the present invention may alternatively be prepared by simultaneously reacting the lignin with a suitable reagent, to attach a group R via a linker L as taught herein, while mixing with a polyester, such as e.g. PET, PBAT, PLA, PCL, PBT, PEF, PHA, PHB or PBS.

The chemical modification of the lignin, e.g. HWL or HWKL, may be performed at 60°C and 250°C, such as 60°C or higher, 80°C or higher, or 100°C or higher, or 120°C or higher, or 150°C or higher, or 160°C or higher, or 180°C or higher, but preferably not higher than 250°C.

<u>The composition comprising chemically modified HWL and polyester</u>

The present invention relates to a composition comprising a polyester and a chemically modified HWL. The composition is essentially a mixture between a polyester, e.g. PET, PLA, PCL, PBT, PEF, PHA, PHB, PBS or PBAT, and a chemically modified HWL, e.g. a HWKL, according to Figure I, II, III, IV, V, VI or mixtures thereof. The modification yielding the modified HWL may be done by allowing the HWL to react with suitable reagents as taught elsewhere herein.

It was surprisingly found that compositions of the invention have one or several advantageous physicochemical properties, such as e.g. tensile strength, toughness, film forming properties, such as e.g. the formation of films being less or equal than/to 20 $\mu$m or 12 $\mu$m and elongation at break, as compared to the corresponding pure polyester *per-se* or corresponding compositions of the prior-art, such as e.g. compositions based on lignin from softwood. In light of the present prior-art, further detailed herein before, one or several such physicochemical properties of mixtures of chemically modified lignin and polyesters are expected to be less advantageous as compared to the corresponding pure polyester.

The optimal range of the chemically modified HWL in a composition of the invention may be 2 to 90 weight-%, such as 5 to 80 weight-%, 5 to 70 weight-%, 10 to 60 weight-%, 20 to 60 weight-%, 30 to 60 weight-%, 30 to 50 weight-% or 40 to 60 weight-% of the composition of the invention.

In a composition of the invention, the polyester may typically constitute essentially the rest of the total weight of the composition, when the weight of the chemically modified HWL has been subtracted. The sum of the singularity or plurality of polyesters and the singularity or plurality of chemically modified HWL may constitute more than 90 weight-%, such as more than 95, 98 or 99 weight-% of the total weight of the composition. The remaining 10, 5, 2 and 1 weight-%, respectively, may be constituted by one or several of suitable fillers, compatibilizers or the like.

The advantageous physicochemical properties of a composition of the invention may include, without being limited thereto, a singularity or plurality of a group of properties consisting of strain at break, young's modulus, film forming properties and toughness.

According to one embodiment, the composition of the invention may comprise a chemically modified HWL being a mixture of compounds according to Formula I and II and a polyester being selected from the group of polyesters consisting of PET, PLA, PCL, PBT, PEF, PHA, PHB, PBS and PBAT. The substituent R of Formula I and II may be selected from $C_4$-$C_{25}$-alkyl, $CH[(CH_2)_mCH_3]CH(OH)(CH_2)_mC(=O)OC_{1-3}$alkyl, $CH[CH(OH)(CH_2)_mCH_3](CH_2)_mC(=O)OC_{1-3}$alkyl, phenyl, ortho-methyl phenyl, para-methyl phenyl, cyclohexyl, 4-tertbutyl phenyl, 2-ethyl hexyl, cardanyl, nonylphenyl and compounds of formula S1, S2, S3, S4, S5 and S6, wherein the integer m may be 3 to 10 and the integer n may be 1 to 180. The composition may comprise 2 to 90 weight-%, such as 5 to 80 weight-%, 5 to 70 weight-%, 10 to 60 weight-%, 20 to 60

weight-%, 30 to 60 weight-% or 40 to 60 weight-% of the HWL. Advantages of such a composition include an improved strain at break as compared to the polyester *per-se.*

According to one embodiment, the composition of the invention may comprise a chemically modified HWL, e.g. a HWKL, being derived from tree from trees from genus Eucalyptus, such as e.g. Eucalyptus globulus, and being a mixture of compounds according to Formula I and II and a polyester being selected from the group of polyesters consisting of PET, PLA, PCL, PBT, PEF, PHA, PHB, PBS and PBAT. The substituent R of Formula I and II may be selected from $C_4$-$C_{25}$-alkyl, $CH[(CH_2)_mCH_3]CH(OH)(CH_2)_mC(=O)OC_{1-3}$alkyl, $CH[CH(OH)(CH_2)_mCH_{3]}(CH_2)_mC(=O)OC_{1-3}$alkyl, phenyl, ortho-methyl phenyl, para-methyl phenyl, cyclohexyl, 4-tertbutyl phenyl, 2-ethyl hexyl, cardanyl, nonylphenyl and compounds of formula S1, S2, S3, S4, S5 and S6, wherein the integer m may be 3 to 10 and the integer n may be 1 to 180. The composition may comprise 2 to 90 weight-%, such as 5 to 80 weight-%, 5 to 70 weight-%, 10 to 60 weight-%, 20 to 60 weight-%, 30 to 60 weight-% or 40 to 60 weight-% of the HWL. Advantages of such a composition include an improved strain at break as compared to the polyester *per-se.*

According to one embodiment, the composition of the invention may comprise a chemically modified HWL, e.g. a HWKL, being derived from tree from trees from genus Eucalyptus, such as e.g. Eucalyptus globulus, and being a mixture of compounds according to Formula I and II and a polyester being selected from the group of polyesters consisting of PBS and PBAT. The substituent R of Formula I and II may be selected from $C_4$-$C_{25}$-alkyl, such as e.g. $C_{12}$-$C_{14}$-alkyl. The composition may comprise 20 to 60 weight-%, such as e.g. 35 to 45 weight-% or 40 weight-% of the HWL. Advantages of such a composition include an improved strain at break as compared to the polyester *per-se.*

According to one embodiment, the composition of the invention may comprise a chemically modified HWL being a compound according to Formula III and a polyester being selected from the group of polyesters consisting of PET, PLA, PCL, PBT, PEF, PHA, PHB, PBS and PBAT. The substituent R of Formula III may be selected from $C_4$-$C_{25}$-alkyl, $CH[(CH_2)_mCH_3]CH(OH)(CH_2)_mC(=O)OC_{1-3}$alkyl, $CH[CH(OH)(CH_2)_mCH_{3]}(CH_2)_mC(=O)OC_{1-3}$alkyl, phenyl, ortho-methyl phenyl, para-methyl phenyl, cyclohexyl, 4-tertbutyl phenyl, 2-ethyl hexyl, cardanyl, nonylphenyl and compounds of formula S1, S2, S3, S4, S5 and S6, wherein the integer m may be 3 to 10 and the integer n may be 1 to 180. The composition may comprise 2 to 90 weight-%, such as 5 to 80 weight-%, 5 to 70 weight-%, 10 to 60 weight-%, 20 to 60 weight-%, 30 to 60 weight-% or 40 to 60 weight-% of the HWL. Advantages of such a composition include an improved strain at break as compared to the polyester *per-se.*

According to one embodiment, the composition of the invention may comprise a chemically modified HWL being a compound according to Formula IV and a polyester being selected from the group of polyesters consisting of PET, PLA, PCL, PBT, PEF, PHA, PHB, PBS and PBAT. The substituent R of Formula IV may be selected from $C_4$-$C_{25}$-alkyl, $CH[(CH_2)_mCH_3]CH(OH)(CH_2)_mC(=O)OC_{1-3}$alkyl, $CH[CH(OH)(CH_2)_mCH_{3]}(CH_2)_mC(=O)OC_{1-3}$alkyl, phenyl, ortho-methyl phenyl, para-methyl phenyl, cyclohexyl, 4-tertbutyl phenyl, 2-ethyl hexyl, cardanyl, nonylphenyl and compounds of formula S1, S2, S3, S4, S5 and S6, wherein the integer m may be 3 to 10 and the integer n may be 1 to 180. The composition may comprise 2 to 90 weight-%, such as 5 to 80 weight-%, 5 to 70 weight-%, 10 to 60 weight-%, 20 to 60 weight-%, 30 to 60 weight-% or 40 to 60 weight-% of the HWL. Advantages of such a composition include an improved strain at break as compared to the polyester *per-se.*

According to one embodiment, the composition of the invention may comprise a chemically modified HWL, e.g. a HWKL, being derived from tree from trees from genus Eucalyptus, such as e.g. Eucalyptus globulus, and being a compound according to Formula IV and a polyester being selected from the group of polyesters consisting of PBS and PBAT. The substituent R of Formula IV may be selected from $CH[(CH_2)_mCH_3]CH(OH)(CH_2)_mC(=O)OC_{1-3}$alkyl, $CH[CH(OH)(CH_2)_mCH_{3]}(CH_2)_mC(=O)OC_{1-3}$alkyl, phenyl, ortho-methyl phenyl, para-methyl phenyl, cyclohexyl, 4-tertbutyl phenyl, 2-ethyl hexyl, cardanyl, nonylphenyl and compounds of formula S1, S2, S3, S4, S5 and S6, wherein the integer m may be 3 to 10 and the integer n may be 1 to 180. The composition may comprise 20 to 60 weight-%, such as e.g. 35 to 45 weight-% or 40 weight-% of the HWL. Advantages of such a composition include an improved strain at break as compared to the polyester *per-se.*

According to one embodiment, the composition of the invention may comprise a chemically modified HWL being a compound according to Formula V and a polyester being selected from the group of polyesters consisting of PET, PLA, PCL, PBT, PEF, PHA, PHB, PBS and PBAT. The substituent R of Formula V may be selected from $C_4$-$C_{25}$-alkyl, phenyl, ortho-methyl phenyl, para-methyl phenyl, cyclohexyl, 4-tertbutyl phenyl, 2-ethyl hexyl, cardanyl and nonylphenyl. The composition may comprise 2 to 90 weight-%, such as 5 to 80 weight-%, 5 to 70 weight-%, 10 to 60 weight-%, 20 to 60 weight-%, 30 to 60 weight-% or 40 to 60 weight-% of the HWL. Advantages of such a composition include an improved strain at break as compared to the polyester *per-se.*

According to one embodiment, the composition of the invention may comprise a chemically modified HWL being a compound according to Formula VI and a polyester being selected from the group of polyesters consisting of PET, PLA, PCL, PBT, PEF, PHA, PHB, PBS and PBAT. The substituent R of Formula VI may be selected from $C_4$-$C_{25}$-alkyl, phenyl, ortho-methyl phenyl, para-methyl phenyl, cyclohexyl, 4-tertbutyl phenyl, 2-ethyl hexyl, cardanyl and nonylphenyl. The composition may comprise 2 to 90 weight-%, such as 5 to 80 weight-%, 5 to 70 weight-%, 10 to 60 weight-%, 20 to 60 weight-%, 30 to 60 weight-% or 40 to 60 weight-% of the HWL. Advantages of such a composition include an improved

strain at break as compared to the polyester *per-se.*

According to one embodiment, the composition of the invention may comprise a chemically modified HWL being a compound according to Formula I, II or IV and a polyester being selected from the group of polyesters consisting of PBS and PBAT. The substituent R of the compound according to Formula I, II or IV may be selected from $C_4$-$C_{25}$-alkyl, $CH[(CH_2)_mCH_3]CH(OH)(CH_2)_mC(=O)OC_{1-3}$alkyl, $CH[CH(OH)(CH_2)_mCH_3](CH_2)_mC(=O)OC_{1-3}$alkyl, phenyl, ortho-methyl phenyl, para-methyl phenyl, cyclohexyl, 4-tertbutyl phenyl, 2-ethyl hexyl, cardanyl, nonylphenyl and compounds of formula S1, S2, S3, S4, S5 and S6, wherein the integer m may be 3 to 10 and the integer n may be 1 to 180. The composition may comprise 2 to 90 weight-%, such as 5 to 80 weight-%, 5 to 70 weight-%, 10 to 60 weight-%, 20 to 60 weight-%, 30 to 60 weight-% or 40 to 60 weight-% of the HWL. Advantages of such a composition include an improved strain at break as compared to the polyester *per-se.*

According to one embodiment, the composition of the invention may comprise a chemically modified HWL being a compound according to Formula I or II, or mixtures thereof, and a polyester being selected from the group of polyesters consisting of PBS and PBAT. The substituent R of the compound according to Formula I or II may be selected from $C_4$-$C_{25}$-alkyl, phenyl, ortho-methyl phenyl, para-methyl phenyl, cyclohexyl, 4-tertbutyl phenyl, 2-ethyl hexyl, cardanyl and nonylphenyl. The composition may comprise 2 to 90 weight-%, such as 5 to 80 weight-%, 5 to 70 weight-%, 10 to 60 weight-%, 20 to 60 weight-%, 30 to 60 weight- % or 40 to 60 weight-% of the HWL. Advantages of such a composition include an improved strain at break as compared to the polyester *per-se.*

According to one embodiment, the composition of the invention may comprise a chemically modified HWL being a compound according to Formula IV and a polyester being selected from the group of polyesters consisting of PBS and PBAT. The substituent R of the compound according to Formula IV may be selected from $CH[(CH_2)_mCH_3]CH(OH)(CH_2)_mC(=O)OC_{1-3}$alkyl and $CH[CH(OH)(CH_2)_mCH_3](CH_2)_mC(=O)OC_{1-3}$alkyl, wherein the integer m may be 3 to 10. The composition may comprise 2 to 90 weight-%, such as 5 to 80 weight-%, 5 to 70 weight-%, 10 to 60 weight-%, 20 to 60 weight-%, 30 to 60 weight-% or 40 to 60 weight-% of the HWL. Advantages of such a composition include an improved strain at break as compared to the polyester *per-se.*

According to one embodiment, the composition of the invention may comprise a chemically modified HWL, such as e.g. a HWKL, which HWL is originating from trees from genus Eucalyptus. Non-limiting examples of such suitable trees consist of consisting of Eucalyptus grandis, Eucalyptus urophylla, Eucalyptus acmenoides, Eucalyptus astringens, Eucalyptus botryoides, Eucalyptus camaldulensis, Eucalyptus diversicolor, Eucalyptus globulus, Eucalyptus grandis, Eucalyptus loxophleba, Eucalyptus marginata, Eucalyptus microcorys, Eucalyptus paniculata, Eucalyptus pilularis, Eucalyptus regnans, Eucalyptus obliqua, Eucalyptus delegatensis, Eucalyptus resinifera, Eucalyptus robusta, Eucalyptus saligna, Eucalyptus sideroxylon, Eucalyptus transcontinentalis and Eucalyptus wandoo.

A study showed that the composition of the invention could be processed through extrusion and injection moulding, even without any added compatibilizer. The modified HWL could be compounded together with the polyester followed by extrusion at sufficiently high temperatures such as at above 100 °C, e.g. 110-250 °C, 130-240 °C, 140-220 °C, 140-200 °C, 140-190 °C or 140-180 °C. The extrusion can be done using a twin screw extruder. The obtained extruded product may be turned into pellets or powder which may then be dried using any suitable technique.

Injection moulding of the present composition may also be done at temperatures above 100°C, such as above 110°C or even at 200°C or higher without any increase in viscosity or pressure. In one embodiment the temperature is 110-250°C. The starting material for the injection moulding may be the pellets or powder obtained from the extrusion described above. Injection moulding facilitates that the more complex shapes and structures may be prepared from the present material.

According to one embodiment, the composition of the present invention may be extruded or injection moulded to yield a physical product. Such physical product may have a pre-defined shape as dependent on the production thereof and as well understood by the skilled artisan. Such a physical product may be produced by extrusion by mixing a polyester, further described herein, the modified lignin of the present invention and optionally a compatibilizer, to form a mixture. This mixture may be extruded at a temperature of at least 100°C, preferably at least 170°C or at least 250°C, to form an extruded material. This extruded material may then optionally be cut prior to drying.

According to one embodiment, the composition of the present invention may be injection molded. For example, a powder or pellets of the composition may be molded into a desired shape at a temperature of at least 100°C, or preferably at least 180°C or at least 250°C.

According to one embodiment, the modified HWL of the present invention may be thermally stable at temperatures up to 150°C, or up to 180°C, or up to 200°C, or up to 220°C, or up to 240°C.

According to one embodiment, the modified HWL of the present invention may be employed as the only constituent or one of the constituents of a compatibilizer. For example, the modified HWL may be mixed with polymers, such as a polyester, or mixtures of polymers, such as mixtures of polyesters, in solution, dry state or in melt.

According to one embodiment, the composition of the invention may comprise a chemically modified hardwood lignin carrying one or several *O*-substituents selected from substituents of Formula I-S and II-S, in which R may be independently selected from $C_4$-$C_{25}$-alkyl, phenyl, ortho-methyl phenyl, para-methyl phenyl, cyclohexyl, 4-tertbutyl

phenyl, 2-ethyl hexyl, cardanyl and nonylphenyl. The polyester of the composition of the invention may be PBAT (PolyButylene Adipate Terephthalate), PCL (PolyCaproLactone) or mixtures thereof. The chemically modified hardwood lignin may constitute 10 to 50 weight-% of the total weight of the composition, such as 10 to 45 weight-% or 10 to 40 weight-%.

According to one embodiment, the composition of the invention may comprise a chemically modified hardwood lignin carrying one or several *O*-substituents selected from substituents of Formula I-S and II-S, in which R may be independently selected from $C_4$-$C_{25}$-alkyl, ortho-methyl phenyl, and cardanyl. The polyester of the composition of the invention may be PBAT (PolyButylene Adipate Terephthalate), PCL (PolyCaproLactone) or mixtures thereof. The chemically modified hardwood lignin may constitute 10 to 50 weight-% of the total weight of the composition, such as 10 to 45 weight-% or 10 to 40 weight-%.

According to one embodiment, the composition of the invention may comprise a chemically modified hardwood lignin carrying one or several *O*-substituents selected from substituents of Formula I-S and II-S, in which R may be independently selected from $C_4$-$C_{25}$-alkyl, phenyl, ortho-methyl phenyl, para-methyl phenyl, cyclohexyl, 4-tertbutyl phenyl, 2-ethyl hexyl, cardanyl and nonylphenyl. The polyester of the composition of the invention may be PBAT (PolyButylene Adipate Terephthalate). The chemically modified hardwood lignin may constitute 10 to 50 weight-% of the total weight of the composition, such as 10 to 45 weight-% or 10 to 40 weight-%.

According to one embodiment, the composition of the invention may comprise a chemically modified hardwood lignin carrying one or several *O*-substituents selected from substituents of Formula I-S and II-S, in which R may be independently selected from $C_4$-$C_{25}$-alkyl, phenyl, ortho-methyl phenyl, para-methyl phenyl, cyclohexyl, 4-tertbutyl phenyl, 2-ethyl hexyl, cardanyl and nonylphenyl. The polyester of the composition of the invention may be PCL (PolyCaproLactone). The chemically modified hardwood lignin may constitute 10 to 50 weight-% of the total weight of the composition, such as 10 to 45 weight-% or 10 to 40 weight-%.

According to one embodiment, the composition of the invention may comprise a chemically modified hardwood lignin carrying one or several *O*-substituents selected from substituents of Formula I-S and II-S, in which R may be independently selected from $C_4$-$C_{25}$-alkyl. The polyester of the composition of the invention may be PBAT (PolyButylene Adipate Terephthalate). The chemically modified hardwood lignin may constitute 10 to 45 weight-% of the total weight of the composition.

According to one embodiment, the composition of the invention may comprise a chemically modified hardwood lignin carrying one or several *O*-substituents selected from substituents of Formula I-S and II-S, in which R may be independently selected from $C_4$-$C_{25}$-alkyl and ortho-methyl phenyl. The polyester of the composition of the invention may be PCL (PolyCaproLactone). The chemically modified hardwood lignin may constitute 10 to 40 weight-% of the total weight of the composition.

EXAMPLES

Materials

The origin of the HWL was from the tree Eucalyptus globulus and the softwood lignin used originates from a mixture of the trees Spruce (Picea abies) 50-60% and Pine (Pinus sylvestris) 40-50%. The lignin used in the present examples was processed from black liquor from the Kraft process where the lignin was precipitated out by the Ligno Boost process and then dried to generate a Lignin powder (96% dry content). The $C_{12}$-$C_{14}$-glycidyl ether oil (Cas# 68609-97-2) was purchased from AL.P.A.S. s.r.l.

<u>Preparation of chemically modified HWL's and softwood lignins (Examples 1:1 to 1:4)</u>

*Example 1:1 Preparation of a chemically modified HWKL according to formula I and II with a substitution degree of 12 wt%, i.e. 0.032 eq/ru, wherein R is $C_{12}$-$C_{14}$-alkyl by reaction in a* Winkworth Laboratory Zigma-blade kneader.

880 g of Lignin powder and 120 g (0,032 eq) of $C_{12}$-$C_{14}$-glycidyl ether oil (Cas# 68609-97-2) was first mixed together at ambient temperature, which resulted in a powder of Lignin-oil mixture where the oil was well dispersed with the lignin. 1 kg of the Lignin-oil mixture were added into a Winkworth Laboratory Zigma-blade kneader (7 liter working volume, 10 liter in total volume) which had been preheated to 160-190°C in the mixture chamber. The oil heating circulator (Huber CC304b) was set to 200 °C (due to energy losses). The rotation speed of the mixing blades was set to the lowest setting and vacuum was applied to around 800 mbar in order to evacuate moisture and volatiles. Every 10 minutes the machine was stopped and the black rubbery sticky material (product) was scraped away from the walls in order to get better heat exchange to the Lignin-oil powder and the machine was reclosed and the vacuum reapplied and the machine was run for another 10 min and the procedure was repeated. After 45 minutes of kneading, all the Lignin-oil powder had transformed into a homogeneous black viscous material. The black viscous product was removed from the reactor with a total yield of

946g of the title product.

*Example 1:2 Preparation of a chemically modified HWKL according to formula I and II with a substitution degree of 20 wt%, i.e. 0.058 eq/ru, wherein R is $C_{12}$-$C_{14}$-alkyl, by reaction in a Winkworth Laboratory Zigma-blade kneader.*

800 g of Lignin powder and 200 g (0,058 eq) of $C_{12}$-$C_{14}$-glycidyl ether oil (Cas# 68609-97-2) was first mixed together at ambient temperature, which resulted in a powder of Lignin-oil mixture where the oil was well dispersed with the lignin. 1 kg of the Lignin-oil mixture were added into a Winkworth Laboratory Zigma-blade kneader (7 liter working volume, 10 liter in total volume) which had been preheated to 160-190 °C in the mixture chamber. The oil heating circulator (Huber CC304b) was set to 200 °C (due to energy losses). The rotation speed of the mixing blades was set to the lowest setting and vacuum was applied to around 800 mbar in order to evacuate moisture and volatiles. Every 10 minutes the machine was stopped and the black rubbery sticky material (product) was scraped away from the walls in order to get better heat exchange to the Lignin-oil powder and the machine was reclosed and the vacuum reapplied and the machine was run for another 10 min and the procedure was repeated. After 45 minutes of kneading, all the Lignin-oil powder had transformed into a homogeneous black viscous material. The black viscous product was removed from the reactor with a total yield of 933g of product with the structure according the structure I and II where the R is C12-C14.

*Example 1:3 Preparation of a chemically modified SWKL (Softwood Kraft Lignin) according to formula I and II with a substitution degree of 12 wt%, i.e. 0.032 eq/ru, wherein R* is *$C_{12}$-$C_{14}$-alkyl by reaction in a Winkworth Laboratory Zigma-blade kneader.*

Was prepared with the same procedure as in Example 1:1 with exception that Softwood Kraft Lignin (SWKL) was used.

*Example 1:4 Preparation of a chemically modified SWKL according to formula I and II with a substitution degree of 20 wt%, i.e. 0.058 eq/ru, wherein R is $C_{12}$-$C_{14}$-alkyl, by reaction in a Winkworth Laboratory Zigma-blade kneader.*

Was prepared with the same procedure as in Example 1:2 with exception that SWKL was used.

*Example 1:5 Preparation of a chemically modified HWKL according to formula I and II with a substitution degree of 20 wt%, i.e., 0.274 eq/ru, wherein R is* ortho-methyl phenyl, *i.e., ortho-cresyl, by reaction in a Winkworth Laboratory Zigma-blade kneader.*

800 g of Lignin powder and 200 g (0,274 eq) of ortho-Cresyl glycidyl ether oil (Cas# 2210-79-9) was first mixed together at ambient temperature, which resulted in a powder of Lignin-oil mixture where the oil was well dispersed with the lignin. 1 kg of the Lignin-oil mixture were added into a Winkworth Laboratory Zigma-blade kneader (7 liter working volume, 10 liter in total volume) which had been preheated to 160-190 °C in the mixture chamber. The oil heating circulator (Huber CC304b) was set to 230 °C (due to energy losses). The rotation speed of the mixing blades was set to the lowest setting and vacuum was applied to around 800 mbar in order to evacuate moisture and volatiles. Every 10 minutes the machine was stopped, and the black rubbery sticky material (product) was scraped away from the walls in order to get better heat exchange to the Lignin-oil powder and the machine was reclosed and the vacuum reapplied, and the machine was run for another 10 min and the procedure was repeated. After 45 minutes of kneading, all the Lignin-oil powder had transformed into a homogeneous black viscous material. The black viscous product was removed from the reactor with a total yield of 933g of product with the structure according to the structure I and II where the *R is* ortho-methyl phenyl, *i.e., ortho-cresyl.*

Production of compositions comprising chemically modified HWL's or softwood lignins and polyesters

*Example 2:1 Production of a composition comprising 40 weight-% of a chemically modified HWKL according to formula I and II with a substitution degree of 12 wt% (0.032 eq/ ru) and 60 weight-% of a polyester being PBAT*

Polybutylene adipate terephthalate (PBAT) (Ecoworld™ 003) was compounded with 40 % of the compound from Experiment 1:1 in a Brabender internal mixer. 30g of PBAT and 20 g of the compound from Experiment 1:1 was added to the internal mixture with a temperature set to 165 °C and a blade speed at 60 rpm. The internal mixer was run for 10 min.

*Example 2:2 Production of a composition comprising 40 weight-% of a chemically modified HWKL according to formula I and II with a substitution degree of 20 wt% (0.058 eq/ru) and 60 weight-% of a polyester being PBAT*

Polybutylene adipate terephthalate (PBAT) (Ecoworld™ 003) was compounded with 40 % of the compound from

Experiment 1:2 in a Brabender internal mixer. 30g of PBAT and 20 g of the compound from Experiment 1:2 was added to the internal mixture with a temperature set to 165 °C and a blade speed at 60 rpm. The internal mixer was run for 10 min.

*Example 2:3 Production of a 100% of a polyester being PBAT, as a reference*

Polybutylene adipate terephthalate (PBAT) (Ecoworld™ 003) was compounded in a Brabender internal mixer. 50g of PBAT was added to the internal mixture with a temperature set to 165 °C and a blade speed at 60 rpm. The internal mixer was run for 10 min.

*Example 2:4 Production of a composition comprising 40 weight-% of a chemically modified SWKL according to formula I and II with a substitution degree of 12 wt% (0.032 eq/ru) and 60 weight-% of a polyester being PBAT*

Polybutylene adipate terephthalate (PBAT) (Ecoworld™ 003) was compounded with 40 % of the compound from Experiment 1:3 in a Brabender internal mixer. 30g of PBAT and 20 g of the compound from Experiment 1:3 was added to the internal mixture with a temperature set to 165 °C and a blade speed at 60 rpm. The internal mixer was run for 10 min.

*Example 2:5 Production of a composition comprising 40 weight-% of a chemically modified SWKL according to formula I and II with a substitution degree of 20 wt% (0.058 eq/ru) and 60 weight-% of a polyester being PBAT*

Polybutylene adipate terephthalate (PBAT) (Ecoworld™ 003) was compounded with 40 % of the compound from Experiment 1:4 in a Brabender internal mixer. 30g of PBAT and 20 g of the compound from Experiment 1:4 was added to the internal mixture with a temperature set to 165 °C and a blade speed at 60 rpm. The internal mixer was run for 10 min.

*Example 2:6 Production of a composition comprising 50 weight-% of a chemically modified HWKL according to formula I and II with a substitution degree of 20 wt% (0.058 eq/ru) and 50 weight-% of a polyester being PBAT*

Polybutylene adipate terephthalate (PBAT) (Ecoworld™ 003) was compounded with 50 % of the compound from Experiment 1:2 in a Brabender internal mixer. 25g of PBAT and 25 g of the compound from Experiment 1:2 was added to the internal mixture with a temperature set to 165 °C and a blade speed at 60 rpm. The internal mixer was run for 10 min.

*Example 2: 7 Production of a composition comprising 45 weight-% of a chemically modified HWKL according to formula I and II with a substitution degree of 20 wt% (0.058 eq/ru) and 55 weight-% of a polyester being PBAT*

Polybutylene adipate terephthalate (PBAT) (Ecoworld™ 003) was compounded with 45 % of the compound from Experiment 1:2 in a Brabender internal mixer. 27,5g of PBAT and 22,5 g of the compound from Experiment 1:2 was added to the internal mixture with a temperature set to 165 °C and a blade speed at 60 rpm. The internal mixer was run for 10 min.

*Example 2:8 Production of a composition comprising 10 weight-% of a chemically modified HWKL according to formula I and II with a substitution degree of 20 wt% (0.058 eq/ru) and 90 weight-% of a polyester being PBAT*

Polybutylene adipate terephthalate (PBAT) (Ecoworld™ 003) was compounded with 10 % of the compound from Experiment 1:2 in a Brabender internal mixer. 45 g of PBAT and 5 g of the compound from Experiment 1:2 was added to the internal mixture with a temperature set to 165 °C and a blade speed at 60 rpm. The internal mixer was run for 10 min.

*Example 2: 9 Production of a 100% of a polyester being PCL, as a reference* Polycaprolactone (PCL) (Ingevity™ CAPA 6500) was compounded in a Brabender internal mixer. 50g of PCL was added to the internal mixture with a temperature set to 165 °C and a blade speed at 60 rpm. The internal mixer was run for 10 min.

*Example 2:10 Production of a composition comprising 40 weight-% of a chemically modified HWKL according to formula I and II with a substitution degree of 20 wt% (0.058 eq/ru) and 60 weight-% of a polyester being* Polycaprolactone (PCL) Polycaprolactone (PCL) (Ingevity™ CAPA 6500) was compounded with 40 % of the compound from Experiment 1:2 in a LabTech Twin screw-extruder (Screw diameter = 20mm, L/D = 60; the screw profile has transport elements from barrel 1-3, from barrel 4 to 13 transport and kneading elements, and from barrel 14-15 transport element that builds up pressure to the die; Motor power = 11 kW). The total feeding rate of the materials was set to 4 kg/h and the screw speed set to 350 rpm. At barrel 1, 40 % of the compound from Experiment 1:2 was feeded through a side-feeder. At barrel 10, PCL was feeded through a side-feeder. The processing temperature was set as followed: 1$^{st}$ barrel section equipped with a side feeder 80°C (Lignin feeding), 2$^{nd}$-3$^{rd}$ barrel section 150°C, 4$^{th}$-9$^{th}$ barrel section 190°C, 10$^{th}$-15$^{th}$ barrel section 170-100°C (gradient) and the die sections 95 °C. The two strands from the die head were cooled on an air-cooled conveyer (2,6 m, 8 fans, steel mesh conveyer belt) and then pelletized in a strand pelletizer.

*Example 2:11 Production of a composition comprising 10 weight-% of a chemically modified HWKL according to*

*formula I and II with a substitution degree of 20 wt% (0.058 eq/ru) and 90 weight-% of a polyester being* Polycaprolactone (PCL) Polycaprolactone (PCL) (Ingevity™ CAPA 6500) was compounded with 10 % of the compound from Experiment 1:2 in a LabTech Twin screw-extruder (Screw diameter = 20mm, L/D = 60; the screw profile has transport elements from barrel 1-3, from barrel 4 to 13 transport and kneading elements, and from barrel 14-15 transport element that builds up pressure to the die; Motor power = 11 kW). The total feeding rate of the materials was set to 4 kg/h and the screw speed set to 350 rpm. At barrel 1, 10 % of the compound from Experiment 1:2 was feeded through a side-feeder. At barrel 10, PCL was feeded through a side-feeder. The processing temperature was set as followed: 1$^{st}$ barrel section equipped with a side feeder 80°C (Lignin feeding), 2$^{nd}$-3$^{rd}$ barrel section 150°C, 4$^{th}$-9$^{th}$ barrel section 190°C, 10$^{th}$-15$^{th}$ barrel section 170-100°C (gradient) and the die sections 95 °C. The two strands from the die head were cooled on an air-cooled conveyer (2,6 m, 8 fans, steel mesh conveyer belt) and then pelletized in a strand pelletizer.

*Example 2:12 Production of a composition comprising 40 weight-% of a chemically modified HWKL according to formula I and II with a substitution degree of 20 wt% (0.274 eq/ru) and 60 weight-% of a polyester being* Polycaprolactone (PCL) Polycaprolactone (PCL) (Ingevity™ CAPA 6500) was compounded with 40 % of the compound from Experiment 1:5 in a LabTech Twin screw-extruder (Screw diameter = 20mm, L/D = 60; the screw profile has transport elements from barrel 1-3, from barrel 4 to 13 transport and kneading elements, and from barrel 14-15 transport element that builds up pressure to the die; Motor power = 11 kW). The total feeding rate of the materials was set to 4 kg/h and the screw speed set to 350 rpm. At barrel 1, 40 % of the compound from Experiment 1:5 was feeded through a side-feeder. At barrel 10, PCL was feeded through a side-feeder. The processing temperature was set as followed: 1$^{st}$ barrel section equipped with a side feeder 80°C (Lignin feeding), 2$^{nd}$-3$^{rd}$ barrel section 150°C, 4$^{th}$-9$^{th}$ barrel section 190°C, 10$^{th}$-15$^{th}$ barrel section 170-100°C (gradient) and the die sections 95 °C. The two strands from the die head were cooled on an air-cooled conveyer (2,6 m, 8 fans, steel mesh conveyer belt) and then pelletized in a strand pelletizer.

*Example 2:13 Production of a composition comprising 10 weight-% of a chemically modified HWKL according to formula I and II with a substitution degree of 20 wt% (0.274 eq/ru) and 90 weight-% of a polyester being* Polycaprolactone (PCL) Polycaprolactone (PCL) (Ingevity™ CAPA 6500) was compounded with 10 % of the compound from Experiment 1:5 in a LabTech Twin screw-extruder (Screw diameter = 20mm, L/D = 60; the screw profile has transport elements from barrel 1-3, from barrel 4 to 13 transport and kneading elements, and from barrel 14-15 transport element that builds up pressure to the die; Motor power = 11 kW). The total feeding rate of the materials was set to 4 kg/h and the screw speed set to 350 rpm. At barrel 1, 10 % of the compound from Experiment 1:5 was feeded through a side-feeder. At barrel 10, PCL was feeded through a side-feeder. The processing temperature was set as followed: 1$^{st}$ barrel section equipped with a side feeder 80°C (Lignin feeding), 2$^{nd}$-3$^{rd}$ barrel section 150°C, 4$^{th}$-9$^{th}$ barrel section 190°C, 10$^{th}$-15$^{th}$ barrel section 170-100°C (gradient) and the die sections 95 °C. The two strands from the die head were cooled on an air-cooled conveyer (2,6 m, 8 fans, steel mesh conveyer belt) and then pelletized in a strand pelletizer.

Physicochemical properties of compositions of the invention and comparison with the corresponding polyesters

The materials from Exampel 2:1, 2:2, 2:3, 2:4, 2:5, 2:6, 2:7, 2:8, 2:9, 2:10, 2:11, 2:12 and 2:13 were each hot pressed into films. The material was placed in the hot melt press, which had been preheated to 150_°C, and a pressure of 4 ton for 3 min was applied followed by an increase of the pressure to 50 ton for 1 min. The thickness of the films was aimed to be around 1 mm.

Dog bones was obtained by cutting the films in a manual cutting press (Elastocon EP 08), equipped with cutting dies for tensile testing (Elastocon EP 04 ASTM D638-14). The dimension of the dog bones was: Overall length = 85 mm, "Reduced" section = 25 mm, Width = 4 mm. The velocity of the test was chosen to 3 mm/min, which correspond to 10% of the "reduced" section according to the standard method ASTM D638.

| Example | Composition | | | Young's modulus MPa | Tensile strenght (MPa) | Strain at Break (%) | Toughness (MJ/m$^3$) |
|---|---|---|---|---|---|---|---|
| | Polyester / Proportion of composition (weight-%) | Modified HWL, unless otherwise noted (structure #) / Proportion of composition (weight-%) | degree of modification (eq/ru) | | | | |
| Example 2:1 | PBAT / 60 | I and II / 40 | 0.032 | 130.7 | 21.9 | 1049.2 | 140.7 |
| Example 2:4 | PBAT / 60 | I and II / 40 (Note 1) | 0.032 | 84.33 | 16.92 | 504.30 | |

(continued)

| | Composition | | | Young's modulus MPa | Tensile strenght (MPa) | Strain at Break (%) | Toughness (MJ/m$^3$) |
|---|---|---|---|---|---|---|---|
| Example 2:2 | PBAT / 60 | I and II / 40 | 0.058 | 114.3 | 21.0 | 1260.4 | 148.89 |
| Example 2:5 | PBAT / 60 | I and II / 40 (Note 1) | 0.058 | 63.91 | 18.49 | 733.52 | |
| Example 2:3 | PBAT / 100 | - - | - - | 55.9 | 21.8 | 1199.8 | 167.2 |
| Example 2:6 | PBAT / 50 | I and II / 50 | 0.058 | | 12.64 | 1181.28 | |
| Example 2:7 | PBAT / 55 | I and II / 45 | 0.058 | | 14.88 | 1217.12 | |
| Example 2:8 | PBAT / 90 | I and II / 10 | 0.058 | | 18.60 | 1451.60 | |
| Example 2:9 | PCL / 100 | - - | | | 16.50 | 836.60 | |
| Example 2:10 | PCL / 60 | I and II / 40 | 0.058 | | 20.00 | 1178.40 | |
| Example 2:11 | PCL / 90 | I and II / 10 | 0.058 | | 18.40 | 1157.28 | |
| Example 2:12 | PCL / 60 | I and II / 40 | 0.274 | | 15.52 | 781.60 | |
| Example 2:13 | PCL / 90 | I and II / 10 | 0.274 | | 24.32 | 1315.68 | |
| *Note 1: The modified lignin was derived from softwood.* | | | | | | | |

The results in the table above shows that compositions comprising a polyester and a chemically modified HWL (Examples 2.1 and 2.2), surprisingly has at least a strain at break which significantly exceeds the same of the corresponding composition based on a softwood lignin (Examples 2.4 and 2.5). Furthermore, it may surprisingly be noted that a composition comprising 40 weight-% of a modified HWL according to the invention has a tensile strength which is comparable to the corresponding polyester *per-se* (compare Examples 2.1 and 2.2 with Example 2.3), while the corresponding compositions based on lignin from softwood has a significantly lower tensile strength in comparison to the same pure polyester *per-se* (compare Examples 2.4 and 2.5 with Example 2.3). In addition, it may surprisingly be noted that a composition comprising 10, 45 or 50 weight-% of a modified HWL according to the invention has a strain at break which is at least comparable to the corresponding polyester *per-se* (compare Examples 2:8, 2:7 and 2:6 with Example 2:3 and Examples 2:11, 2:13, 2:10 and 2:12 with Example 2:9). Yet furthermore, it may surprisingly be noted that a composition comprising 10 or 40 weight-% of a modified HWL according to the invention has a tensile strength which is greater than the tensile strength of the corresponding polyester *per-se* (compare Examples 2:13, 2:10 and 2:11 with Example 2:9).

ITEMIZED LIST OF EMBODIMENTS

1. A composition comprising a chemically modified hardwood lignin and a polyester, wherein

- said chemically modified hardwood lignin is carrying one or several *O*-substituents selected from substituents of Formula I-S to VI-S,

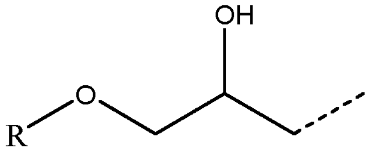

I-S

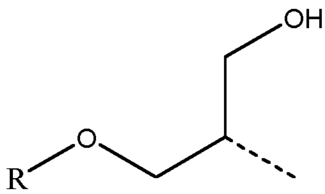

II-S

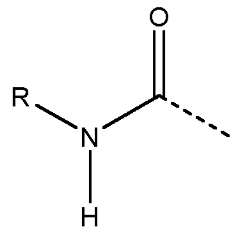

III-S

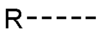

IV-S

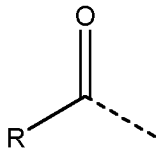

V-S

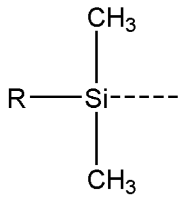

VI-S

- R is comprising at least 2 carbon atoms;
- said polyester is one or several of PET, PLA, PCL, PBT, PEF, PHA, PHB, PBS and PBAT; and
- said chemically modified hardwood lignin constitutes 2 to 90 weight-% of the total weight of said composition.

2. A composition according to claim 1, wherein

- said *O*-substituents being selected from substituents of Formula I-S, II-S and IV-S; and
- R being independently selected from $C_4$-$C_{25}$-alkyl, $CH[(CH_2)_mCH_3]CH(OH)(CH_2)_mC(=O)OC_{1-3}$alkyl, $CH[CH(OH)(CH_2)_mCH_{3]}(CH_2)_mC(=O)OC_{1-3}$alkyl, phenyl, ortho-methyl phenyl, para-methyl phenyl, cyclohexyl, 4-tertbutyl phenyl, 2-ethyl hexyl, cardanyl, nonylphenyl and a substituent of Formula S1, S2, S3, S4, S5 and S6, wherein the integer m is 3 to 10 and the integer n is 1 to 180.

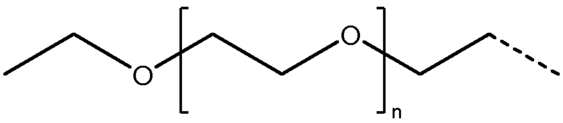

S1

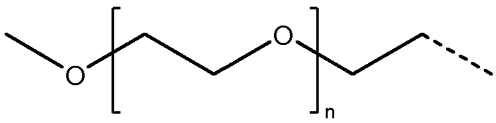

S2

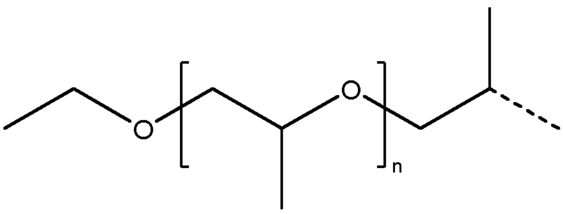

S3

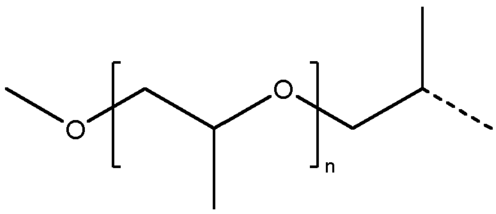

S4

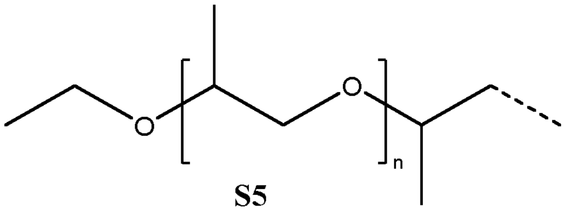

S5

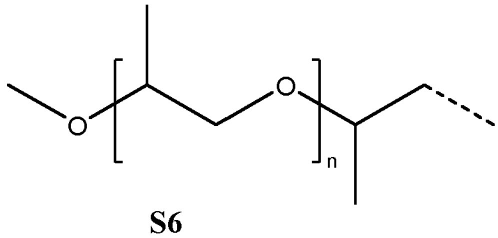

S6

3. A composition according to claim 2, wherein

- said *O*-substituents being a mixture of substituents of Formula I and II or a substituent of Formula IV;
- R being independently selected from $C_4$-$C_{25}$-alkyl, and a substituent of Formula S1, S2, S3, S4, S5 and S6, wherein the integer n is 1 to 180, when said *O*-substituent being a mixture of substituents of Formula I-S and II-S; and
- R being independently selected from $CH[(CH_2)_mCH_3]CH(OH)(CH_2)_mC(=O)OC_{1-3}$alkyl, $CH[CH(OH)(CH_2)_mCH_3](CH_2)_mC(=O)OC_{1-3}$alkyl and a substituent of Formula S1, S2, S3, S4, S5 and S6, wherein the integer m is 3 to 10 and the integer n is 1 to 180, when said *O*-substituent being a substituent of Formula IV-S.

4. A composition according to claim 3, wherein

- said *O*-substituents being a mixture of substituents of Formula I and II; and
- R being selected from $C_4$-$C_{25}$-alkyl.

5. A composition according any one of the preceding claims, wherein said polyester is selected from PBS and PBAT or mixtures thereof.

6. A composition according any one of the preceding claims, wherein said chemically modified hardwood lignin is derived from trees from genus Eucalyptus.

7. A composition according any one of the preceding claims, wherein said chemically modified hardwood lignin constitutes 20 to 60 weight-%, such as 30 to 50 weight-%, of the total weight of said composition and essentially the rest of the total weight of said composition being said polyester.

8. A product being extruded and/or injection moulded and comprising said composition according to any one of claims 1 to 7.

9. A method of extruding said composition according to any one of claims 1 to 7, comprising the steps of:

- mixing said chemically modified hardwood lignin and said polyester and optionally a compatibilizer, to form a mixture;
- extruding said mixture at a temperature of at least 100°C to form an extruded material;
- optionally cutting said extruded material into pellets; and
- optionally drying said extruded material.

10. A method of injection moulding said composition according to any one of claims 1 to 7, comprising the steps of:

- providing pellets or powder of said composition; and
    - injection moulding said pellets or powder into a desired shape at a temperature of at least 100°C.

## Claims

1. A composition comprising a chemically modified hardwood lignin and a polyester, wherein

   - said chemically modified hardwood lignin is carrying one or several *O*-substituents selected from substituents of Formula I-S and II-S,

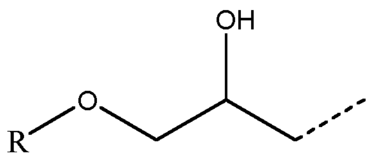

I-S

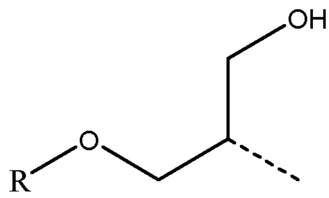

II-S

   - R being independently selected from $C_4$-$C_{25}$-alkyl, phenyl, ortho-methyl phenyl, para-methyl phenyl, cyclohexyl, 4-tertbutyl phenyl, 2-ethyl hexyl, cardanyl and nonylphenyl;
   - said polyester is PBAT (PolyButylene Adipate Terephthalate), PCL (PolyCaproLactone) or mixtures thereof; and
   - said chemically modified hardwood lignin constitutes 10 to 50 weight-% of the total weight of said composition.

2. A composition according to claim 1, wherein R being independently selected from $C_4$-$C_{25}$-alkyl, phenyl and ortho-methyl phenyl.

3. A composition according to any one of the preceding claims, wherein said polyester is PBAT (PolyButylene Adipate Terephthalate) and said chemically modified hardwood lignin constitutes 10 to 45 weight-% of the total weight of said composition.

4. A composition according to any one of the preceding claims, wherein said polyester is PCL (PolyCaproLactone) and said chemically modified hardwood lignin constitutes 10 to 40 weight-% of the total weight of said composition.

5. A composition according to any one of the preceding claims, wherein said chemically modified hardwood lignin is derived from trees from genus Eucalyptus.

6. A composition according any one of the preceding claims, wherein essentially the rest of the total weight of said composition, beside said chemically modified hardwood lignin, being said polyester.

7. A product being extruded and/or injection moulded and comprising said composition according to any one of claims 1 to 6.

8. A method of extruding said composition according to any one of claims 1 to 6, comprising the steps of:

   - mixing said chemically modified hardwood lignin and said polyester and optionally a compatibilizer, to form a mixture;
   - extruding said mixture at a temperature of at least 100°C to form an extruded material;
   - optionally cutting said extruded material into pellets; and
   - optionally drying said extruded material.

9. A method of injection moulding said composition according to any one of claims 1 to 6, comprising the steps of:

   - providing pellets or powder of said composition; and

     - injection moulding said pellets or powder into a desired shape at a temperature of at least 100°C.

## Patentansprüche

**1.** Zusammensetzung umfassend ein chemisch modifiziertes Hartholzlignin und einen Polyester, wobei

- das chemisch modifizierte Hartholzlignin einen oder mehrere O-Substituenten ausgewählt aus Substituenten der Formel I-S und II-S trägt,

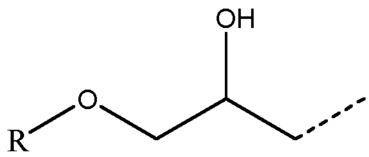

I-S

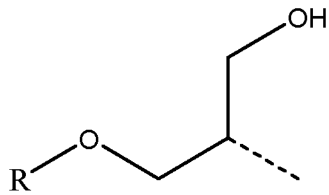

II-S

- R unabhängig ausgewählt ist aus $C_4$-$C_{25}$-Alkyl, Phenyl, ortho-Methylphenyl, para-Methylphenyl, Cyclohexyl, 4-tert-Butylphenyl, 2-Ethylhexyl, Cardanyl und Nonylphenyl;
- der Polyester PBAT (Polybutylenadipatterephthalat), PCL (Polycaprolacton) oder Gemische davon ist; und
- das chemisch modifizierte Hartholzlignin 10 bis 50 Gew.-% des Gesamtgewichts der Zusammensetzung darstellt.

**2.** Zusammensetzung nach Anspruch 1, wobei R unabhängig ausgewählt ist aus $C_4$-$C_{25}$-Alkyl, Phenyl und ortho-Methylphenyl.

**3.** Zusammensetzung nach einem der vorstehenden Ansprüche, wobei der Polyester PBAT (Polybutylenadipatterephthalat) ist und das chemisch modifizierte Hartholzlignin 10 bis 45 Gew.-% des Gesamtgewichts der Zusammensetzung darstellt.

**4.** Zusammensetzung nach einem der vorstehenden Ansprüche, wobei der Polyester PCL (Polycaprolacton) ist und das chemisch modifizierte Hartholzlignin 10 bis 40 Gew.-% des Gesamtgewichts der Zusammensetzung darstellt.

**5.** Zusammensetzung nach einem der vorstehenden Ansprüche, wobei das chemisch modifizierte Hartholzlignin von Bäumen der Gattung Eucalyptus abgeleitet ist.

**6.** Zusammensetzung nach einem der vorstehenden Ansprüche, wobei im Wesentlichen der Rest des Gesamtgewichts der Zusammensetzung neben dem chemisch modifizierten Hartholzlignin der Polyester ist.

**7.** Produkt, das extrudiert und/oder spritzgegossen ist und die Zusammensetzung nach einem der Ansprüche 1 bis 6 umfasst.

**8.** Verfahren zur Extrusion der Zusammensetzung nach einem der Ansprüche 1 bis 6, umfassend die Schritte:

- Mischen des chemisch modifizierten Hartholzlignins und des Polyesters und gegebenenfalls eines Verträglichkeitsvermittlers, um ein Gemisch zu bilden;
- Extrudieren des Gemischs bei einer Temperatur von wenigstens 100 °C , um ein extrudiertes Material zu bilden;
- gegebenenfalls Schneiden des extrudierten Materials zu Pellets; und
- gegebenenfalls Trocknen des extrudierten Materials.

**9.** Verfahren zum Spritzguss der Zusammensetzung nach einem der Ansprüche 1 bis 6, umfassend die Schritte:

- Bereitstellen von Pellets oder Pulver der Zusammensetzung; und
- Spritzgießen der Pellets oder des Pulvers zu einer gewünschten Form bei einer Temperatur von wenigstens 100 °C.

## Revendications

**1.** Composition comprenant une lignine de bois dur chimiquement modifiée et un polyester, dans laquelle

- ladite lignine de bois dur chimiquement modifiée porte un ou plusieurs substituants de O choisis parmi les substituants de formule I-S et II-S,

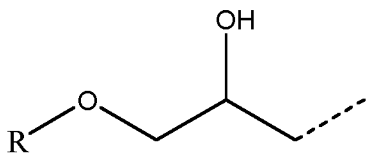

**I-S**

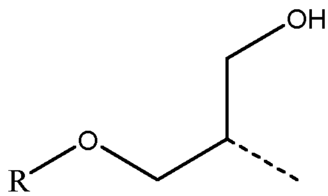

**II-S**

- R étant indépendamment choisi parmi alkyle en $C_4$-$C_{25}$, phényle, ortho-méthylphényle, para-méthylphényle, cyclohexyle, 4-tert-butylphényle, 2-éthylhexyle, cardanyle et nonylphényle ;
- ledit polyester est un PBAT (poly(adipate téréphtalate de butylène)), une PCL (polycaprolactone) ou leurs mélanges ; et
- ladite lignine de bois dur chimiquement modifiée constitue 10 à 50 % en poids du poids total de ladite composition.

**2.** Composition selon la revendication 1, dans laquelle R est indépendamment choisi parmi alkyle en $C_4$-$C_{25}$, phényle et ortho-méthylphényle.

**3.** Composition selon l'une quelconque des revendications précédentes, dans laquelle ledit polyester est un PBAT (poly(adipate téréphtalate de butylène)) et ladite lignine de bois dur chimiquement modifiée constitue 10 à 45 % en poids du poids total de ladite composition.

**4.** Composition selon l'une quelconque des revendications précédentes, dans laquelle ledit polyester est une PCL (polycaprolactone) et ladite lignine de bois dur chimiquement modifiée constitue 10 à 40 % en poids du poids total de ladite composition.

**5.** Composition selon l'une quelconque des revendications précédentes, dans laquelle ladite lignine de bois dur chimiquement modifiée est dérivée d'arbres du genre Eucalyptus.

**6.** Composition selon l'une quelconque des revendications précédentes, dans laquelle essentiellement le reste du poids total de ladite composition, outre ladite lignine de bois dur chimiquement modifiée, est ledit polyester.

**7.** Produit qui est extrudé et/ou moulé par injection et comprenant ladite composition selon l'une quelconque des revendications 1 à 6.

**8.** Procédé d'extrusion de ladite composition selon l'une quelconque des revendications 1 à 6, comprenant les étapes de :

- mélange de ladite lignine de bois dur chimiquement modifiée et dudit polyester et éventuellement d'un agent compatibilisant, pour former un mélange ;
- extrusion dudit mélange à une température d'au moins 100 °C pour former un matériau extrudé ;
- éventuellement découpe dudit matériau extrudé en pastilles ; et
- éventuellement séchage dudit matériau extrudé.

**9.** Procédé de moulage par injection de ladite composition selon l'une quelconque des revendications 1 à 6, comprenant les étapes de :

- fourniture de pastilles ou de poudre de ladite composition ; et
- moulage par injection desdites pastilles ou de ladite poudre en une forme souhaitée à une température d'au

moins 100 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018111183 A1
- US 9000075 B2
- US 3072634 A
- US 2016355535 A


### Non-patent literature cited in the description


- **GLASSER**. *Tappi Journal*, March 2017 (3), 111-121
- **XIONG**. *ACS Sustainable Chem. Eng.*, 2020, vol. 8, 5338-5346
- *Ind. Eng. Chem. Res.*, 2012, vol. 51 (51), 16713-16720
- *ACS Sustainable Chem. Eng.*, 2016, vol. 4 (10), 5212-5222